# EUROPEAN PATENT APPLICATION

(11) **EP 4 550 131 A1**
(43) Date of publication of application: **07.05.2025**
(21) Application number: 23845431.8
(22) Date of filing: 20.07.2023
(51) Int. Cl.: G06F 9/451

(54) **ICON ARRANGEMENT METHOD AND APPARATUS, AND DEVICE AND STORAGE MEDIUM**

(30) Priority: 27.07.2022 CN 202210889933
(71) Applicant: Huawei Technologies Co., Ltd., Shenzhen, Guangdong 518129 (CN)
(72) Inventor: ZHANG, Jing, Shenzhen, Guangdong 518129 (CN); ZHANG, Yundie, Shenzhen, Guangdong 518129 (CN); DING, Yaling, Shenzhen, Guangdong 518129 (CN); LIU, Anqi, Shenzhen, Guangdong 518129 (CN)
(74) Representative: Gill Jennings & Every LLP
(86) International application number: PCT/CN2023/108405
(87) International publication number: WO 2024/022220

(57) **Abstract**

Embodiments of this application provide an icon arrangement method and apparatus, a device, and a storage medium. The method includes: determining a target adjustment page and a target adjustment rule in response to a layout adjustment operation of a user; obtaining an icon on the target adjustment page, determining a desktop layout of an electronic device, and adjusting an icon layout of the target adjustment page based on the desktop layout of the electronic device and the target adjustment rule, to obtain at least one target display page, where each target display page includes a plurality of application icons and another icon, the another icon includes at least one of a folder icon, a service card, or a widget, and the folder icon includes at least two application icons; and displaying the at least one target display page. In this way, efficiency of arranging icons on a user desktop can be improved, and aesthetics of the user desktop can be improved.

## Description

This application claims priority to Chinese Patent Application No. 202210889933.5, filed with the China National Intellectual Property Administration on July 27, 2022 and entitled "ICON ARRANGEMENT METHOD AND APPARATUS, DEVICE, AND STORAGE MEDIUM", which is incorporated herein by reference in its entirety.

### TECHNICAL FIELD

This application relates to the field of communication technologies, and specifically, to an icon arrangement method and apparatus, a device, and a storage medium.

### BACKGROUND

With continuous development of mobile terminal technologies, functions of mobile terminals such as mobile phones and tablet computers are continuously improved, to facilitate daily life and work of people. A user may install an application (Application, APP) on a used mobile terminal. After the application is installed, an icon corresponding to the installed application is generated on a desktop of the mobile terminal, and is displayed to the user as a shortcut for starting the application. In addition, the user may further add icons such as a plurality of service cards and widgets to the desktop of the mobile terminal, to meet various requirements of the user. However, because a quantity of various icons is increasing, the desktop of the mobile terminal is cluttered, and it is difficult for the user to find a required application. In this case, the user may manually arrange and beautify the plurality of desktop icons, but arrangement efficiency is low.

In a related technology, an operating system of the mobile terminal may sort the icons on the desktop of the terminal based on icon colors, use frequencies, or the like, and then sequentially display the icons on the desktop of the mobile terminal in a determined arrangement sequence of the icons. However, this desktop icon arrangement manner is not flexible enough, and cannot meet various requirements of the user.

### SUMMARY

In view of this, this application provides an icon arrangement method and apparatus, a device, and a storage medium, to help resolve a problem in the conventional technology that an existing icon arrangement manner is inefficient and inflexible.

According to a first aspect, an embodiment of this application provides an icon arrangement method. The method includes:
determining a target adjustment page and a target adjustment rule in response to a layout adjustment operation of a user;
obtaining an icon on the target adjustment page;
determining a desktop layout of the electronic device;
adjusting an icon layout of the target adjustment page based on the desktop layout of the electronic device and the target adjustment rule, to obtain at least one target display page, where each of the at least one target display page includes a plurality of application icons and another icon, the another icon includes at least one of a folder icon, a service card, or a widget, and the folder icon includes at least two application icons; and
displaying the at least one target display page.

In a possible implementation of the first aspect, the layout adjustment operation includes a classification-based layout adjustment operation.

The determining a target adjustment page and a target adjustment rule in response to a layout adjustment operation of a user includes:
in response to the classification-based layout adjustment operation of the user, determining all display pages of the electronic device as target adjustment pages, and determining a classification-based layout adjustment rule as the target adjustment rule, where the classification-based layout adjustment rule includes a first icon classification sub-rule and a first display sub-rule.

The adjusting an icon layout of the target adjustment page based on the desktop layout of the electronic device and the target adjustment rule, to obtain at least one target display page includes:
classifying the icon on the target adjustment page according to the first icon classification sub-rule, to obtain at least one type of icon;
determining, based on the desktop layout of the electronic device, each type of icon, and the first display sub-rule, a first display page corresponding to each type of icon, a page display manner of each type of icon on the first display page, and whether to add the another icon, where the page display manner includes a full-screen display manner or a half-screen display manner;
determining a display priority corresponding to each type of icon; and
arranging, based on the page display manner of each type of icon on the first display page and whether to add the another icon, each type of icon to the first display page corresponding to each type of icon, to obtain a target display page.

The displaying the target display page includes:
displaying the target display page of each type in descending order of display priorities.

In a possible implementation of the first aspect, the classification-based layout adjustment rule further includes a half-screen combination rule.

Before the arranging, based on the page display manner of each type of icon on the first display page and whether to add the another icon, each type of icon to the first display page corresponding to each type of icon, to obtain a target display page, the method further includes:
determining, based on the page display manner of each type of icon on the first display page, whether there are at least two second display pages in the first display page corresponding to each type of icon, where a page display manner of the second display page is the half-screen display manner; and
if there are at least two second display pages, dividing the second display pages into at least one combined page group in pairs based on display priorities of second display pages, and for each combined page group, combining, according to the half-screen combination rule, a second display page with a lower priority into a second display page with a higher priority in the combined page group.

In a possible implementation of the first aspect, the classification-based layout adjustment operation includes a color classification-based layout adjustment operation, and the first icon classification sub-rule includes a dominant hue value range corresponding to each color type.

The classifying the icon on the target adjustment page according to the first icon classification sub-rule, to obtain at least one type of icon includes:
obtaining a dominant hue value of each icon on the target adjustment page;
determining a color type corresponding to the dominant hue value of each icon based on the first icon classification sub-rule and the dominant hue value of each icon; and
determining, based on the color type corresponding to the dominant hue value of each icon, icons corresponding to a same color type as icons of one type, to obtain the at least one type of icon.

In a possible implementation of the first aspect, the method further includes:
determining, based on a size of each type of icon in the at least one type of icon, a quantity of grids occupied by each type of icon in the at least one type of icon;
determining, based on the quantity of grids occupied by each type of icon, whether there is an icon of a first type in the at least one type of icon, where the icon of the first type is a type of icon whose quantity of occupied grids is less than a first preset threshold; and
if there are icons of at least two first types, combining the icons of the at least two first types into icons of one type.

In a possible implementation of the first aspect, the icon on the target adjustment page includes one or more of an application icon, a service card, and a widget.

The determining, based on the desktop layout of the electronic device, each type of icon, and the first display sub-rule, a first display page corresponding to each type of icon, a page display manner of each type of icon on the first display page, and whether to add the another icon includes:
determining a quantity of rows of the desktop layout of the electronic device and a quantity of grids of the desktop layout of the electronic device based on the desktop layout of the electronic device;
for each type of icon in the at least one type of icon, determining the quantity of occupied grids corresponding to the type of icon;
determining whether the type of icon includes a special icon, where the special icon includes the service card and the widget;
if the type of icon does not include the special icon, determining whether the quantity of occupied grids corresponding to the type of icon exceeds a second preset threshold;
if the quantity of occupied grids corresponding to the type of icon exceeds the second preset threshold, determining the first display page corresponding to the type, where the page display manner of the type of icon on the first display page is the full-screen display manner; and determining to add the folder icon and the service card or the widget;
if the quantity of occupied grids corresponding to the type of icon exceeds the first preset threshold and does not exceed the second preset threshold, determining the first display page corresponding to the type, where the page display manner of the type of icon on the first display page is the half-screen display manner; and determining to add the folder icon, the service card, or the widget;
if the type of icon includes the special icon, determining, based on the desktop layout of the electronic device and a size of the special icon in the type of icon, a quantity of rows occupied by the special icon in the type of icon;
determining whether the quantity of rows occupied by the special icon exceeds the quantity of rows of the desktop layout of the electronic device;
if the quantity of rows occupied by the special icon does not exceed the quantity of rows of the desktop layout of the electronic device, determining the first display page corresponding to the type of icon;
determining whether the quantity of grids occupied by the type of icon exceeds the quantity of grids of the desktop layout of the electronic device;
if the quantity of grids occupied by the type of icon exceeds the quantity of grids of the desktop layout of the electronic device, determining that the page display manner of the type of icon on the first display page is the full-screen display manner, and determining to add the folder icon;
if the quantity of grids occupied by the type of icon does not exceed the quantity of grids of the desktop layout of the electronic device and exceeds the second preset threshold, determining that the page display manner of the type of icon on the first display page is the full-screen display manner, and determining not to add the another icon;
if the quantity of grids occupied by the type of icon does not exceed the second preset threshold and exceeds the first preset threshold, determining the quantity of rows occupied by the special icon;
if the quantity of rows occupied by the special icon does not exceed a third preset threshold, determining that the page display manner of the type of icon on the first display page is the half-screen display manner, and determining not to add the another icon; and
if the quantity of rows occupied by the special icon exceeds the second preset threshold, determining that the page display manner of the type of icon on the first display page is the full-screen display manner, and determining not to add the another icon.

In a possible implementation of the first aspect, the method further includes:
if the quantity of rows occupied by the special icon exceeds the quantity of rows of the desktop layout of the electronic device, determining at least two first display pages corresponding to the type of icon, and an icon that is of the type and that needs to be displayed on each first display page; and
for each of the at least two first display pages, determining, based on the icon that is of the type and that needs to be displayed on the first display page, a page display manner, on the first display page, of the icon that is of the type and that needs to be displayed on the first display page and whether to add the another icon.

In a possible implementation of the first aspect, the classification-based layout adjustment rule further includes a first preset arrangement sub-rule.

The arranging, based on the page display manner of each type of icon on the first display page and whether to add the another icon, each type of icon to the first display page corresponding to each type of icon, to obtain a target display page includes:
for each type of icon in the at least one type of icon, determining, based on the page display manner of the type of icon on the first display page and whether to add the another icon, target display content on the first display page corresponding to the type of icon, where the target display content includes all or a part of the type of icon, or includes all or a part of the type of icon and another added icon;
determining display position information of the target display content based on the target display content and the first preset arrangement sub-rule; and
arranging, based on the target display content and the display position information of the target display content, the target display content to the first display page corresponding to the type of icon, to obtain the target display page corresponding to the type of icon.

In a possible implementation of the first aspect, the classification-based layout adjustment operation includes a function classification-based layout adjustment operation, the first icon classification sub-rule includes at least two first function categories, each of the at least two first function categories includes at least two second function categories, and each of the at least two second function categories corresponds to at least one application icon and/or other icon.

The classifying the icon on the target adjustment page according to the first icon classification sub-rule, to obtain at least one type of icon includes:
obtaining a first function category corresponding to the icon on the target adjustment page; and
determining, based on the first function category corresponding to the icon on the target adjustment page, icons corresponding to a same first function category as icons of one type, to obtain the at least one type of icon.

In a possible implementation of the first aspect, the icon on the target adjustment page includes one or more of an application icon, a service card, and a widget.

The determining, based on the desktop layout of the electronic device, each type of icon, and the first display sub-rule, a first display page corresponding to each type of icon, a page display manner of each type of icon on the first display page, and whether to add the another icon includes:
determining a quantity of rows of the desktop layout of the electronic device based on the desktop layout of the electronic device;
for each type of icon in the at least one type of icon, determining a second function category of an application icon in the type of icon;
determining, based on a second function category corresponding to each application icon in the type of icon, application icons corresponding to a same second function category in the type of icon as application icons of one second type, to obtain application icons of at least one second type;
determining, based on a quantity of application icons of the at least one second type, a quantity of folder icons to be added to the first display page corresponding to the type and a size of the to-be-added folder icon;
determining, based on the desktop layout of the electronic device and a size of a special icon in the type of icon, a quantity of rows occupied by the special icon in the type of icon, where the special icon includes the service card and the widget;
   if the quantity of rows occupied by the special icon does not exceed the quantity of rows of the desktop layout of the electronic device, determining the first display page corresponding to the type of icon;
determining, based on the quantity of folder icons to be added to the first display page and the size of the to-be-added folder icon, a quantity of rows occupied by the special icon and the to-be-added folder icon on the first display page;
if the quantity of rows occupied by the special icon and the to-be-added folder icon on the first display page exceeds the quantity of rows of the desktop layout of the electronic device, determining that the page display manner of the type of icon on the first display page is the full-screen display manner, and determining to reduce the size of the to-be-added folder icon;
if the quantity of rows occupied by the special icon and the to-be-added folder icon on the first display page exceeds a fourth preset threshold and does not exceed the quantity of rows of the desktop layout of the electronic device, determining that the page display manner of the type of icon on the first display page is the full-screen display manner, where the fourth preset threshold is less than the quantity of rows of the desktop layout of the electronic device; and
if the quantity of rows occupied by the special icon and the to-be-added folder icon on the first display page does not exceed the fourth preset threshold, determining that the page display manner of the type of icon on the first display page is the half-screen display manner.

In a possible implementation of the first aspect, the method further includes:
if the quantity of rows occupied by the special icon exceeds the quantity of rows of the desktop layout of the electronic device, determining at least two first display pages corresponding to the type of icon, an icon that is of the type and that needs to be displayed on each first display page, and a folder icon that needs to be added; and
for each of the at least two first display pages, determining, based on the icon that is of the type and that needs to be displayed on the first display page and the folder icon that needs to be added, a page display manner, on the first display page, of the icon that is of the type and that needs to be displayed on the first display page and the folder icon that needs to be added.

In a possible implementation of the first aspect, before the determining, based on a quantity of application icons of the at least one second type, a quantity of folder icons to be added to the first display page and a size of the to-be-added folder icon, the method includes:
determining a quantity of application icons of each second type in the application icons of the at least one second type;
determining, based on the quantity of application icons of each second type, whether there are application icons of at least two third types in the application icons of the at least one second type, where a quantity of application icons of the third types is less than a preset icon quantity threshold; and
if there are application icons of at least two third types, combining the application icons of the at least two third types in pairs into application icons of one second type.

In a possible implementation of the first aspect, the method further includes:
if the page display manner of the type of icon on the first display page is the half-screen display manner, obtaining an addable icon, where the addable icon includes a preset addable service card and widget;
determining a target to-be-added icon from the addable icon; and
determining the target to-be-added icon as another icon to be added to the first display page corresponding to the type, and updating the page display manner of the type of icon on the first display page to the full-screen display manner.

In a possible implementation of the first aspect, the classification-based layout adjustment rule further includes a second preset arrangement sub-rule.

The arranging, based on the page display manner of each type of icon on the first display page and whether to add the another icon, each type of icon to the first display page corresponding to each type of icon, to obtain a target display page includes:
for each type of icon, determining, based on the page display manner of each type of icon on the first display page and whether to add the another icon, target display content on the first display page corresponding to the type, where the target display content includes all or a part of the type of icon and another added icon, and the another added icon includes an added folder icon, or an added folder icon and the target to-be-added icon;
determining display position information of the target display content based on the target display content and the second preset arrangement sub-rule; and
arranging, based on the display position information of the target display content, the target display content to the first display page corresponding to the type, to obtain the target display page corresponding to the type of icon.

In a possible implementation of the first aspect, the layout adjustment operation includes a single-page layout adjustment operation.

The determining a target adjustment page and a target adjustment rule in response to a layout adjustment operation of a user includes:
in response to the single-page layout adjustment operation of the user, determining, as the target adjustment page, a display page that is of the electronic device and that is selected by the user by using the single-page layout adjustment operation, and determining a single-page layout adjustment rule as the target adjustment rule, where the single-page layout adjustment rule includes a second icon classification sub-rule and a second display sub-rule.

The adjusting an icon layout of the target adjustment page based on the desktop layout of the electronic device and the target adjustment rule, to obtain at least one target display page includes:
obtaining a current icon layout of the target adjustment page; and
determining a target display page based on the icon on the target adjustment page, the current icon layout of the target adjustment page, the second icon classification sub-rule, the second display sub-rule, and the desktop layout of the electronic device, where an icon layout of the target display page is different from the current icon layout of the target adjustment page.

In a possible implementation of the first aspect, the determining a target display page based on the icon on the target adjustment page, the current icon layout of the target adjustment page, the second icon classification sub-rule, the second display sub-rule, and the desktop layout of the electronic device includes:
determining at least one to-be-used display page based on the icon on the target adjustment page, the current icon layout of the target adjustment page, the second icon classification sub-rule, the second display sub-rule, and the desktop layout of the electronic device, where an icon layout of the at least one to-be-used display page is different from the current icon layout of the target adjustment page;
determining a priority of the at least one to-be-used display page based on the current icon layout of the target adjustment page and the icon layout of the at least one to-be-used display page; and
determining a to-be-used display page with a highest priority in the at least one to-be-used display page as the target display page.

In a possible implementation of the first aspect, the determining a priority of the at least one to-be-used display page based on the current icon layout of the target adjustment page and the icon layout of the at least one to-be-used display page includes:
determining a difference between an icon layout of each of the at least one to-be-used display page and the current icon layout of the target adjustment page based on the current icon layout of the target adjustment page and the icon layout of the at least one to-be-used display page; and
determining the priority of the at least one to-be-used display page based on the difference between the icon layout of each of the at least one to-be-used display page and the current icon layout of the target adjustment page, where the priority of the at least one to-be-used display page is in direct proportion to the difference between the icon layout of each of the at least one to-be-used display page and the current icon layout of the target adjustment page.

In a possible implementation of the first aspect, the single-page layout adjustment rule further includes a third preset arrangement sub-rule.

The determining at least one to-be-used display page based on the icon on the target adjustment page, the current icon layout of the target adjustment page, the second icon classification sub-rule, the second display sub-rule, and the desktop layout of the electronic device includes:
determining a third display page based on the desktop layout of the electronic device;
determining whether there is an adjustable icon in the icon on the target adjustment page, where the adjustable icon includes a service card or a widget whose size is adjustable;
if it is determined that there is no adjustable icon, obtaining type information of an application icon in the icon on the target adjustment page; and performing, according to the second icon classification sub-rule, folder classification on at least two application icons whose type information is the same, to determine at least one to-be-added folder icon;
determining whether there is a folder icon whose size is adjustable in the icon on the target adjustment page;
if there is a folder icon whose size is adjustable, adjusting the size of the folder icon on the target adjustment page, to obtain an adjusted folder icon; and
arranging the at least one to-be-added folder icon and the icon on the target adjustment page to the third display page according to the third preset arrangement sub-rule, to obtain the at least one to-be-used display page.

In a possible implementation of the first aspect, the method further includes:
if it is determined that there is an adjustable icon in the icon on the target adjustment page, adjusting a size of the adjustable icon on the target adjustment page, to obtain an adjusted icon on the target adjustment page;
determining a quantity of rows occupied by the adjusted icon on the target adjustment page;
if the quantity of rows occupied by the adjusted icon on the target adjustment page does not exceed a quantity of rows of the desktop layout of the electronic device, determining, based on the desktop layout of the electronic device, the adjusted icon on the target adjustment page, and the second icon classification sub-rule, whether to add a folder; and
arranging, based on the third preset arrangement sub-rule and a determined result of whether to add the folder, the adjusted icon on the target adjustment page to the third display page, to obtain the at least one to-be-used display page.

In a possible implementation of the first aspect, the determining a to-be-used display page with a highest priority in the at least one to-be-used display page as the target display page includes:
determining a display sequence in the to-be-used display page in descending order of priorities based on the priority of the to-be-used display page; and
determining a 1^{st} to-be-used display page as the target display page based on the display sequence in the to-be-used display page.

The method further includes:
in response to the single-page layout adjustment operation of the user, updating a next to-be-used display page of the current target display page as the target display page based on the display sequence in the to-be-used display page; and
displaying the updated target display page.

In a possible implementation of the first aspect, the layout adjustment operation includes a template-based layout adjustment operation, and the determining a target adjustment page and a target adjustment rule in response to a layout adjustment operation of a user includes:
obtaining a preset layout template in response to the template-based layout adjustment operation of the user, and displaying the preset layout template on the electronic device;
in response to a template selection operation of the user, determining all display pages of the electronic device as target adjustment pages, and determining a to-be-used template; and
determining a template-based layout adjustment rule corresponding to the to-be-used template as the target adjustment rule.

According to a second aspect, an embodiment of this application provides an icon arrangement apparatus, including:
a processing unit, configured to determine a target adjustment page and a target adjustment rule in response to a layout adjustment operation of a user; and
an obtaining unit, configured to obtain an icon on the target adjustment page.

The processing unit is further configured to determine a desktop layout of an electronic device.

The processing unit is further configured to adjust an icon layout of the target adjustment page based on the desktop layout of the electronic device and the target adjustment rule, to obtain at least one target display page, where each of the at least one target display page includes a plurality of application icons and another icon, the another icon includes at least one of a folder icon, a service card, or a widget, and the folder icon includes at least two application icons.

The processing unit is further configured to display the at least one target display page.

In a possible implementation of the second aspect, the processing unit is specifically configured to: in response to the classification-based layout adjustment operation of the user, determine all display pages of the electronic device as target adjustment pages, and determine a classification-based layout adjustment rule as the target adjustment rule, where the classification-based layout adjustment rule includes a first icon classification sub-rule and a first display sub-rule;
classify the icon on the target adjustment page according to the first icon classification sub-rule, to obtain at least one type of icon;
determine, based on the desktop layout of the electronic device, each type of icon, and the first display sub-rule, a first display page corresponding to each type of icon, a page display manner of each type of icon on the first display page, and whether to add the another icon, where the page display manner includes a full-screen display manner or a half-screen display manner;
determine a display priority corresponding to each type of icon;
arrange, based on the page display manner of each type of icon on the first display page and whether to add the another icon, each type of icon to the first display page corresponding to each type of icon, to obtain a target display page; and
display the target display page of each type in descending order of display priorities.

In a possible implementation of the second aspect, the classification-based layout adjustment rule further includes a half-screen combination rule.

The processing unit is further configured to: determine, based on the page display manner of each type of icon on the first display page, whether there are at least two second display pages in the first display page corresponding to each type of icon, where a page display manner of the second display page is the half-screen display manner; and
if there are at least two second display pages, divide the second display pages into at least one combined page group in pairs based on display priorities of second display pages, and for each combined page group, combining, according to the half-screen combination rule, a second display page with a lower priority into a second display page with a higher priority in the combined page group.

In a possible implementation of the second aspect, the processing unit is specifically configured to: obtain a dominant hue value of each icon on the target adjustment page;
determine a color type corresponding to the dominant hue value of each icon based on the first icon classification sub-rule and the dominant hue value of each icon; and
determine, based on the color type corresponding to the dominant hue value of each icon, icons corresponding to a same color type as icons of one type, to obtain the at least one type of icon.

In a possible implementation of the second aspect, the processing unit is further configured to: determine, based on a size of each type of icon in the at least one type of icon, a quantity of grids occupied by each type of icon in the at least one type of icon;
determine, based on the quantity of grids occupied by each type of icon, whether there is an icon of a first type in the at least one type of icon, where the icon of the first type is a type of icon whose quantity of occupied grids is less than a first preset threshold; and
if there are icons of at least two first types, combine the icons of the at least two first types into icons of one type.

In a possible implementation of the second aspect, the processing unit is specifically configured to: determine a quantity of rows of the desktop layout of the electronic device and a quantity of grids of the desktop layout of the electronic device based on the desktop layout of the electronic device;
for each type of icon in the at least one type of icon, determine the quantity of occupied grids corresponding to the type of icon;
determine whether the type of icon includes a special icon, where the special icon includes the service card and the widget;
if the type of icon does not include the special icon, determine whether the quantity of occupied grids corresponding to the type of icon exceeds a second preset threshold;
if the quantity of occupied grids corresponding to the type of icon exceeds the second preset threshold, determine the first display page corresponding to the type, where the page display manner of the type of icon on the first display page is the full-screen display manner; and determine to add the folder icon and the service card or the widget;
if the quantity of occupied grids corresponding to the type of icon exceeds the first preset threshold and does not exceed the second preset threshold, determine the first display page corresponding to the type, where the page display manner of the type of icon on the first display page is the half-screen display manner; and determine to add the folder icon, the service card, or the widget;
if the type of icon includes the special icon, determine, based on the desktop layout of the electronic device and a size of the special icon in the type of icon, a quantity of rows occupied by the special icon in the type of icon;
determine whether the quantity of rows occupied by the special icon exceeds the quantity of rows of the desktop layout of the electronic device;
if the quantity of rows occupied by the special icon does not exceed the quantity of rows of the desktop layout of the electronic device, determine the first display page corresponding to the type of icon;
determine whether the quantity of grids occupied by the type of icon exceeds the quantity of grids of the desktop layout of the electronic device;
if the quantity of grids occupied by the type of icon exceeds the quantity of grids of the desktop layout of the electronic device, determine that the page display manner of the type of icon on the first display page is the full-screen display manner, and determine to add the folder icon;
if the quantity of grids occupied by the type of icon does not exceed the quantity of grids of the desktop layout of the electronic device and exceeds the second preset threshold, determine that the page display manner of the type of icon on the first display page is the full-screen display manner, and determine not to add the another icon;
if the quantity of grids occupied by the type of icon does not exceed the second preset threshold and exceeds the first preset threshold, determine the quantity of rows occupied by the special icon;
if the quantity of rows occupied by the special icon does not exceed a third preset threshold, determine that the page display manner of the type of icon on the first display page is the half-screen display manner, and determine not to add the another icon; and
if the quantity of rows occupied by the special icon exceeds the second preset threshold, determine that the page display manner of the type of icon on the first display page is the full-screen display manner, and determine not to add the another icon.

In a possible implementation of the second aspect, the processing unit is further configured to: if the quantity of rows occupied by the special icon exceeds the quantity of rows of the desktop layout of the electronic device, determine at least two first display pages corresponding to the type of icon, and an icon that is of the type and that needs to be displayed on each first display page; and
for each of the at least two first display pages, determine, based on the icon that is of the type and that needs to be displayed on the first display page, a page display manner, on the first display page, of the icon that is of the type and that needs to be displayed on the first display page and whether to add the another icon.

In a possible implementation of the second aspect, the processing unit is specifically configured to: for each type of icon in the at least one type of icon, determine, based on the page display manner of the type of icon on the first display page and whether to add the another icon, target display content on the first display page corresponding to the type of icon, where the target display content includes all or a part of the type of icon, or includes all or a part of the type of icon and another added icon;
determine display position information of the target display content based on the target display content and the first preset arrangement sub-rule; and
arrange, based on the target display content and the display position information of the target display content, the target display content to the first display page corresponding to the type of icon, to obtain the target display page corresponding to the type of icon.

In a possible implementation of the second aspect, the processing unit is specifically configured to: determine a quantity of rows of the desktop layout of the electronic device based on the desktop layout of the electronic device;
for each type of icon in the at least one type of icon, determine a second function category of an application icon in the type of icon;
determine, based on a second function category corresponding to each application icon in the type of icon, application icons corresponding to a same second function category in the type of icon as application icons of one second type, to obtain application icons of at least one second type;
determine, based on a quantity of application icons of the at least one second type, a quantity of folder icons to be added to the first display page corresponding to the type and a size of the to-be-added folder icon;
determine, based on the desktop layout of the electronic device and a size of a special icon in the type of icon, a quantity of rows occupied by the special icon in the type of icon, where the special icon includes the service card and the widget;
if the quantity of rows occupied by the special icon does not exceed the quantity of rows of the desktop layout of the electronic device, determine the first display page corresponding to the type of icon;
determine, based on the quantity of folder icons to be added to the first display page and the size of the to-be-added folder icon, a quantity of rows occupied by the special icon and the to-be-added folder icon on the first display page;
if the quantity of rows occupied by the special icon and the to-be-added folder icon on the first display page exceeds the quantity of rows of the desktop layout of the electronic device, determine that the page display manner of the type of icon on the first display page is the full-screen display manner, and determine to reduce the size of the to-be-added folder icon;
if the quantity of rows occupied by the special icon and the to-be-added folder icon on the first display page exceeds a fourth preset threshold and does not exceed the quantity of rows of the desktop layout of the electronic device, determine that the page display manner of the type of icon on the first display page is the full-screen display manner, where the fourth preset threshold is less than the quantity of rows of the desktop layout of the electronic device; and
if the quantity of rows occupied by the special icon and the to-be-added folder icon on the first display page does not exceed the fourth preset threshold, determine that the page display manner of the type of icon on the first display page is the half-screen display manner.

In a possible implementation of the second aspect, the processing unit is further configured to: if the quantity of rows occupied by the special icon exceeds the quantity of rows of the desktop layout of the electronic device, determine at least two first display pages corresponding to the type of icon, an icon that is of the type and that needs to be displayed on each first display page, and a folder icon that needs to be added; and
for each of the at least two first display pages, determine, based on the icon that is of the type and that needs to be displayed on the first display page and the folder icon that needs to be added, a page display manner, on the first display page, of the icon that is of the type and that needs to be displayed on the first display page and the folder icon that needs to be added.

In a possible implementation of the second aspect, the processing unit is further configured to: determine a quantity of application icons of each second type in the application icons of the at least one second type;
determine, based on the quantity of application icons of each second type, whether there are application icons of at least two third types in the application icons of the at least one second type, where a quantity of application icons of the third types is less than a preset icon quantity threshold; and
if there are application icons of at least two third types, combine the application icons of the at least two third types in pairs into application icons of one second type.

In a possible implementation of the second aspect, the processing unit is further configured to: if the page display manner of the type of icon on the first display page is the half-screen display manner, obtain an addable icon, where the addable icon includes a preset addable service card and widget;
determine a target to-be-added icon from the addable icon; and
determine the target to-be-added icon as another icon to be added to the first display page corresponding to the type, and update the page display manner of the type of icon on the first display page to the full-screen display manner.

In a possible implementation of the second aspect, the processing unit is specifically configured to: for each type of icon, determine, based on the page display manner of each type of icon on the first display page and whether to add the another icon, target display content on the first display page corresponding to the type, where the target display content includes all or a part of the type of icon and another added icon, and the another added icon includes an added folder icon, or an added folder icon and the target to-be-added icon;
determine display position information of the target display content based on the target display content and the second preset arrangement sub-rule; and
arrange, based on the display position information of the target display content, the target display content to the first display page corresponding to the type, to obtain the target display page corresponding to the type of icon.

In a possible implementation of the second aspect, the processing unit is specifically configured to: in response to the single-page layout adjustment operation of the user, determine, as the target adjustment page, a display page that is of the electronic device and that is selected by the user by using the single-page layout adjustment operation, and determine a single-page layout adjustment rule as the target adjustment rule, where the single-page layout adjustment rule includes a second icon classification sub-rule and a second display sub-rule.

The processing unit is specifically configured to: obtain a current icon layout of the target adjustment page; and
determine a target display page based on the icon on the target adjustment page, the current icon layout of the target adjustment page, the second icon classification sub-rule, the second display sub-rule, and the desktop layout of the electronic device, where an icon layout of the target display page is different from the current icon layout of the target adjustment page.

In a possible implementation of the second aspect, the processing unit is specifically configured to: determine at least one to-be-used display page based on the icon on the target adjustment page, the current icon layout of the target adjustment page, the second icon classification sub-rule, the second display sub-rule, and the desktop layout of the electronic device, where an icon layout of the at least one to-be-used display page is different from the current icon layout of the target adjustment page;
determine a priority of the at least one to-be-used display page based on the current icon layout of the target adjustment page and the icon layout of the at least one to-be-used display page; and
determine a to-be-used display page with a highest priority in the at least one to-be-used display page as the target display page.

In a possible implementation of the second aspect, the processing unit is specifically configured to: determine a difference between an icon layout of each of the at least one to-be-used display page and the current icon layout of the target adjustment page based on the current icon layout of the target adjustment page and the icon layout of the at least one to-be-used display page; and
determine the priority of the at least one to-be-used display page based on the difference between the icon layout of each of the at least one to-be-used display page and the current icon layout of the target adjustment page, where the priority of the at least one to-be-used display page is in direct proportion to the difference between the icon layout of each of the at least one to-be-used display page and the current icon layout of the target adjustment page.

In a possible implementation of the second aspect, the processing unit is specifically configured to: determine a third display page based on the desktop layout of the electronic device;
determine whether there is an adjustable icon in the icon on the target adjustment page, where the adjustable icon includes a service card or a widget whose size is adjustable;
if it is determined that there is no adjustable icon, obtain type information of an application icon in the icon on the target adjustment page; and perform, according to the second icon classification sub-rule, folder classification on at least two application icons whose type information is the same, to determine at least one to-be-added folder icon;
determine whether there is a folder icon whose size is adjustable in the icon on the target adjustment page;
if there is a folder icon whose size is adjustable, adjust the size of the folder icon on the target adjustment page, to obtain an adjusted folder icon; and
arrange the at least one to-be-added folder icon and the icon on the target adjustment page to the third display page according to the third preset arrangement sub-rule, to obtain the at least one to-be-used display page.

In a possible implementation of the second aspect, the processing unit is further configured to: if it is determined that there is an adjustable icon in the icon on the target adjustment page, adjust a size of the adjustable icon on the target adjustment page, to obtain an adjusted icon on the target adjustment page;
determine a quantity of rows occupied by the adjusted icon on the target adjustment page;
if the quantity of rows occupied by the adjusted icon on the target adjustment page does not exceed a quantity of rows of the desktop layout of the electronic device, determine, based on the desktop layout of the electronic device, the adjusted icon on the target adjustment page, and the second icon classification sub-rule, whether to add a folder; and
arrange, based on the third preset arrangement sub-rule and a determined result of whether to add the folder, the adjusted icon on the target adjustment page to the third display page, to obtain the at least one to-be-used display page.

In a possible implementation of the second aspect, the processing unit is specifically configured to: determine a display sequence in the to-be-used display page in descending order of priorities based on the priority of the to-be-used display page; and
determine a 1^{st} to-be-used display page as the target display page based on the display sequence in the to-be-used display page.

The processing unit is further configured to: in response to the single-page layout adjustment operation of the user, update a next to-be-used display page of the current target display page as the target display page based on the display sequence in the to-be-used display page; and
display the updated target display page.

In a possible implementation of the second aspect, the processing unit is specifically configured to: obtain a preset layout template in response to the template-based layout adjustment operation of the user, and display the preset layout template on the electronic device;
in response to a template selection operation of the user, determine all display pages of the electronic device as target adjustment pages, and determine a to-be-used template; and
determine a template-based layout adjustment rule corresponding to the to-be-used template as the target adjustment rule.

According to a third aspect, an embodiment of this application provides an electronic device, including a processor and a memory. The memory stores a computer program, and when the computer program is executed, the electronic device is enabled to perform the method according to any one of the possible implementations of the first aspect.

According to a fourth aspect, an embodiment of this application provides a computer-readable storage medium. The computer-readable storage medium includes a stored program, and when the program runs, a device in which the computer-readable storage medium is located is controlled to perform the method according to any one of the possible implementations of the first aspect.

According to the solution provided in embodiments of this application, the icon arrangement method includes: determining a target adjustment page and a target adjustment rule in response to a layout adjustment operation of a user; obtaining an icon on the target adjustment page, determining a desktop layout of an electronic device, and adjusting an icon layout of the target adjustment page based on the desktop layout of the electronic device and the target adjustment rule, to obtain at least one target display page, where each target display page includes a plurality of application icons and another icon, the another icon includes at least one of a folder icon, a service card, or a widget, and the folder icon includes at least two application icons; and displaying the at least one target display page. In other words, in embodiments of this application, when the user needs to arrange all or some icons displayed on a desktop of the used electronic device, the user may trigger a layout adjustment operation on the electronic device based on an actual requirement. For example, the user may choose to arrange the icons based on an icon color, a function corresponding to an icon, and the like, so that the electronic device arranges, based on the layout adjustment operation of the user, the icons that need to be adjusted by the user. In response to the layout adjustment operation of the user, the electronic device determines, based on the layout adjustment operation of the user, a target adjustment page and a target adjustment rule that correspond to the layout adjustment operation; then, obtain an icon on the target adjustment page, and determine a desktop layout of the electronic device; and adjust an icon layout of the target adjustment page based on the desktop layout of the electronic device and the target adjustment rule, to obtain at least one target display page. In this way, the electronic device may arrange, based on different layout adjustment operations of the user, the icon on the target adjustment page selected by the user, adjust the icon layout of the target adjustment page according to the target adjustment rule, and display, through the electronic device, an adjusted target display page to the user. This improves desktop icon arrangement efficiency and can meet different requirements of the user. Further, because each arranged target display page includes a plurality of application icons and at least one of a folder icon, a service card, and a widget, aesthetics of a user desktop can be improved.

### BRIEF DESCRIPTION OF DRAWINGS

To describe technical solutions in embodiments of this application more clearly, the following briefly describes the accompanying drawings for embodiments. It is clear that the accompanying drawings in the following descriptions show merely some embodiments of this application, and a person of ordinary skill in the art may derive other drawings from these accompanying drawings without creative efforts.
FIG. 1 is a schematic flowchart of an icon arrangement method according to an embodiment of this application;
FIG. 2(1) to FIG. 2(3) are a diagram of a scenario of an icon arrangement method according to an embodiment of this application;
FIG. 3 is a diagram of a scenario of another icon arrangement method according to an embodiment of this application;
FIG. 4 is a diagram of a scenario of another icon arrangement method according to an embodiment of this application;
FIG. 5 is a diagram of a scenario of another icon arrangement method according to an embodiment of this application;
FIG. 6(1) and FIG. 6(2) are a diagram of a scenario of another icon arrangement method according to an embodiment of this application;
FIG. 7(1) to FIG. 7(3) are a diagram of a scenario of another icon arrangement method according to an embodiment of this application;
FIG. 8 is a diagram of a scenario of another icon arrangement method according to an embodiment of this application;
FIG. 9 is a diagram of a scenario of another icon arrangement method according to an embodiment of this application;
FIG. 10 is a diagram of a scenario of another icon arrangement method according to an embodiment of this application;
FIG. 11(1) to FIG. 11(3) are a diagram of a scenario of another icon arrangement method according to an embodiment of this application;
FIG. 12(1) and FIG. 12(2) are a diagram of a scenario of another icon arrangement method according to an embodiment of this application;
FIG. 13(1) to FIG. 13(3) are a diagram of a scenario of another icon arrangement method according to an embodiment of this application;
FIG. 14(1) to FIG. 14(3) are a diagram of content displayed on a desktop of an electronic device according to an embodiment of this application;
FIG. 15(1) to FIG. 15(4) are a diagram of a scenario of another icon arrangement method according to an embodiment of this application;
FIG. 16(1) to FIG. 16(4) are a diagram of a scenario of another icon arrangement method according to an embodiment of this application;
FIG. 17 is a diagram of a structure of an icon arrangement apparatus according to an embodiment of this application; and
FIG. 18 is a diagram of a structure of an electronic device according to an embodiment of this application.

### DESCRIPTION OF EMBODIMENTS

To better understand technical solutions of this application, the following describes embodiments of this application in detail with reference to the accompanying drawings.

It should be noted that described embodiments are merely some rather than all of embodiments of this application. All other embodiments obtained by a person of ordinary skill in the art based on embodiments of this application without creative efforts shall fall within the protection scope of this application.

The terms used in embodiments of this application are merely for the purpose of illustrating specific embodiments, and are not intended to limit this application. The terms "a", "said", and "the" of singular forms used in embodiments and the appended claims of this application are also intended to include plural forms, unless otherwise specified in the context clearly.

It should be understood that the term "and/or" used in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

Before embodiments of this application are specifically described, terms used or possibly used in embodiments of this application are first explained.

Service card: The service card (hereinafter referred to as "card") is an interface display form of a feature ability (Feature Ability, FA). Important information or operations of the FA are directly placed in the card, and a user can directly operate the card to achieve application use experience. This greatly reduces a use hierarchy of an application. The card is usually embedded in another application and displayed as a part of an interface of the another application (an atomic service may alternatively be used to store the application to a service center, which does not need application installation), and supports basic interaction functions such as page opening and message sending.

Widget: The widget is a small piece of code that can be executed on any HTML (Hypertext Markup Language, hypertext markup language)-based world wide web (World Wide Web) page, and may be represented in a form of a video, a map, news, a small game, or the like. The concept of widget derives from code reuse. The widget may be understood as an "applet plug-in", is a small tool that can be made and freely downloaded by the user, and includes a plurality of practical functions such as entertainment, work, and learning.

With continuous development of mobile terminal technologies, functions of mobile terminals such as mobile phones and tablet computers are continuously improved, to facilitate daily life and work of people. A user may install an application (Application, APP) on a used mobile terminal. After the application is installed, an icon corresponding to the installed application is generated on a desktop of the mobile terminal, and is displayed to the user as a shortcut for starting the application. In addition, the user may further add icons such as a plurality of service cards and widgets to the desktop of the mobile terminal, to meet various requirements of the user. However, because a quantity of various icons is increasing, the desktop of the mobile terminal is cluttered, and it is difficult for the user to find a required application. In this case, the user may manually arrange and beautify the plurality of desktop icons, but arrangement efficiency is low.

In a related technology, an operating system of the mobile terminal may sort the icons on the desktop of the terminal based on icon colors, use frequencies, or the like, and then sequentially display the icons on the desktop of the mobile terminal in a determined arrangement sequence of the icons. However, this desktop icon arrangement manner is not flexible enough, and cannot meet various requirements of the user.

For the foregoing problem, embodiments of this application provide an icon arrangement method, including: According to the solution provided in embodiments of this application, the icon arrangement method includes: determining a target adjustment page and a target adjustment rule in response to a layout adjustment operation of a user; obtaining an icon on the target adjustment page; determining a desktop layout of an electronic device; adjusting an icon layout of the target adjustment page based on the desktop layout of the electronic device, the icon on the target adjustment page, and the target adjustment rule, to determine at least one target display page, where each target display page includes a plurality of application icons and another icon, the another icon includes at least one of a folder icon and/or a special icon like a service card or a widget, the folder icon includes at least two application icons, and the special icon includes a service card icon and/or a widget icon; and displaying the at least one target display page. In other words, in embodiments of this application, when the user needs to arrange all or some icons displayed on a desktop of the used electronic device, the user may trigger a layout adjustment operation on the electronic device based on an actual requirement. For example, the user may choose to arrange the icons based on an icon color, a function corresponding to an icon, and the like, so that the electronic device arranges, based on the layout adjustment operation of the user, the icons that need to be adjusted by the user. In response to the layout adjustment operation of the user, the electronic device determines, based on the layout adjustment operation of the user, a target adjustment page and a target adjustment rule that correspond to the layout adjustment operation; then, obtain an icon on the target adjustment page, and determine a desktop layout of the electronic device; and adjust an icon layout of the target adjustment page based on the desktop layout of the electronic device and the target adjustment rule, to obtain at least one target display page. In this way, the electronic device may arrange, based on different layout adjustment operations of the user, the icon on the target adjustment page selected by the user, adjust the icon layout of the target adjustment page according to the target adjustment rule, and display, through the electronic device, an adjusted target display page to the user. This improves desktop icon arrangement efficiency and can meet different requirements of the user. Further, because each arranged target display page includes a plurality of application icons and at least one of the folder icon and/or the special icon like the service card or the widget, page display content is rich, and aesthetics of a user desktop is improved.

In addition to a mobile phone, the electronic device in embodiments of this application may be a tablet computer, a personal computer (personal computer, PC), a personal digital assistant (personal digital assistant, PDA), a smartwatch, a netbook, a wearable electronic device, an augmented reality (augmented reality, AR) device, a virtual reality (virtual reality, VR) device, a vehicle-mounted device, a smart vehicle, a smart speaker, a robot, smart glasses, a smart television, or the like.

It should be noted that in some possible implementations, the electronic device may also be referred to as a terminal device, user equipment (User Equipment, UE), or the like. This is not limited in embodiments of this application.

It should be noted that, for ease of understanding, in the following embodiments of this application, an example in which the electronic device is a mobile phone terminal is used for description.

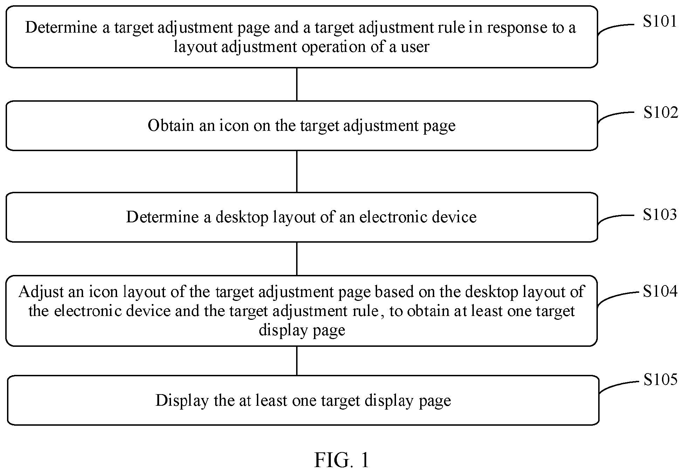

FIG. 1 is a schematic flowchart of an icon arrangement method according to an embodiment of this application. The method is applied to an electronic device, and specifically includes the following steps.

Step S101: Determine a target adjustment page and a target adjustment rule in response to a layout adjustment operation of a user.

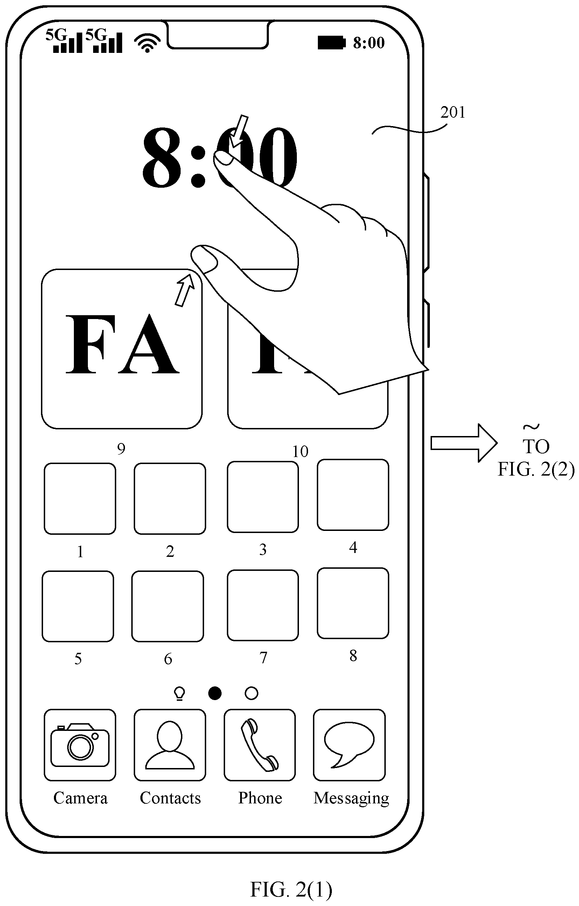

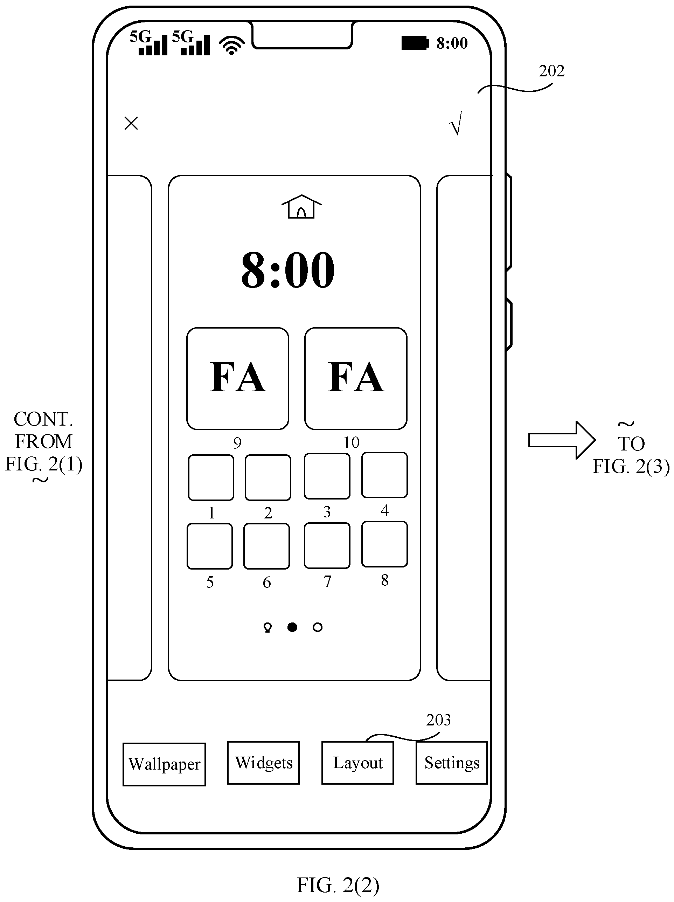

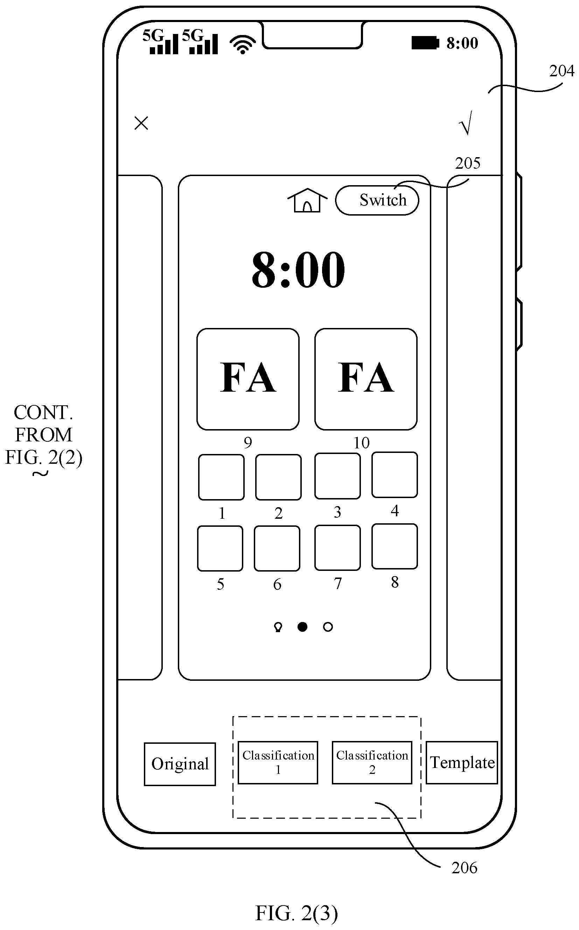

Specifically, when the user needs to arrange desktop icons of the used electronic device, the user may select, based on an actual requirement, an icon on a page that needs to be arranged. For example, the user may choose to arrange icons on all pages based on a color, a function, or the like, or may choose to arrange an icon on a single page. In response to the layout adjustment operation of the user, the electronic device determines the corresponding target adjustment page and target adjustment rule based on the layout adjustment operation of the user. For example, FIG. 2(1) shows a home screen 201 of the electronic device. The user may enter a desktop setting interface 202 by performing an operation of pinching two fingers on the home screen 201 of the electronic device. As shown in FIG. 2(2), a layout button 203 on the desktop setting interface 202 is tapped, to enter a smart desktop layout interface 204 as shown in FIG. 2(3). Certainly, the desktop setting interface 202 may alternatively be entered by using another operation. This is not limited in this application. After entering the smart desktop layout interface 204, the user may trigger different layout adjustment functions by tapping different areas on the smart desktop layout interface 204. For example, the user may tap a switch button 205 on the smart desktop layout interface 204, to trigger a single-page layout adjustment function. In this case, the electronic device may determine a current page (the home screen) selected by the user as the target adjustment page, and determine a rule related to the single-page layout adjustment as the target adjustment rule. The user may tap a classification-based layout button 206 on the smart desktop layout interface 204, to trigger a classification-based layout adjustment function, for example, classification by color or classification by function. The electronic device may learn that the user needs to arrange icons on all display pages of the electronic device. In this case, all the display pages of the electronic device are determined as target adjustment pages, and a corresponding target adjustment rule is determined based on a specific classification-based layout adjustment type selected by the user. Certainly, the user may alternatively choose to perform layout adjustment based on a template or another rule.

It should be noted that a related button of the layout adjustment operation may alternatively be in another form. This is not limited in this application.

In a possible implementation, the layout adjustment operation includes a classification-based layout adjustment operation.

The determining a target adjustment page and a target adjustment rule in response to a layout adjustment operation of a user includes:
in response to the classification-based layout adjustment operation of the user, determining all the display pages of the electronic device as target adjustment pages, and determining a classification-based layout adjustment rule as the target adjustment rule, where the classification-based layout adjustment rule includes a first icon classification sub-rule and a first display sub-rule.

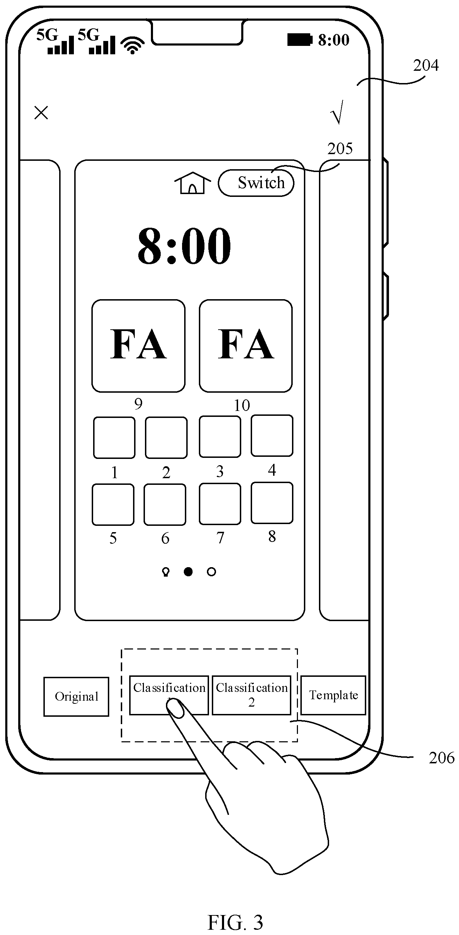

In this embodiment of this application, FIG. 3 shows the smart desktop layout interface 204 of the electronic device. The user may select the classification-based layout adjustment button 206. In response to the classification-based layout adjustment operation of the user, all the display pages of the electronic device are determined as target adjustment pages, and the classification-based layout adjustment rule is determined as the target adjustment rule, where the classification-based layout adjustment rule includes the first icon classification sub-rule and the first display sub-rule.

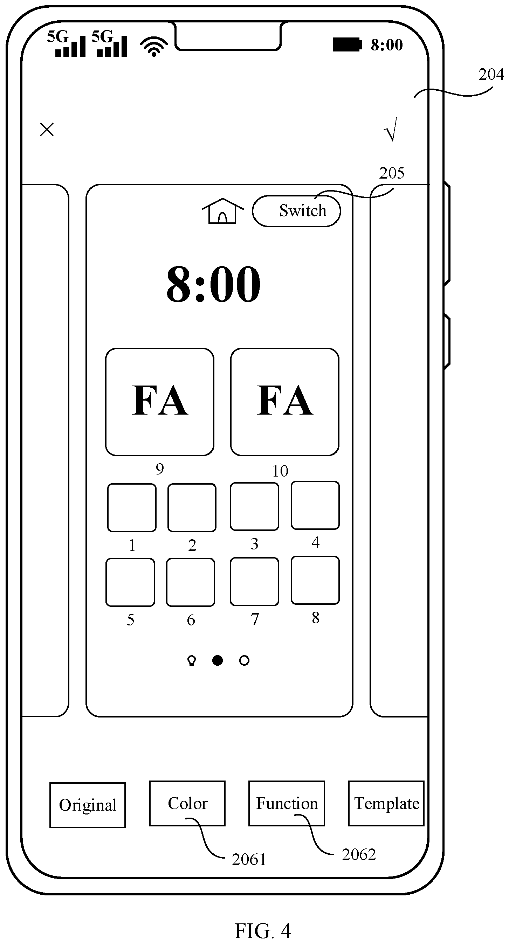

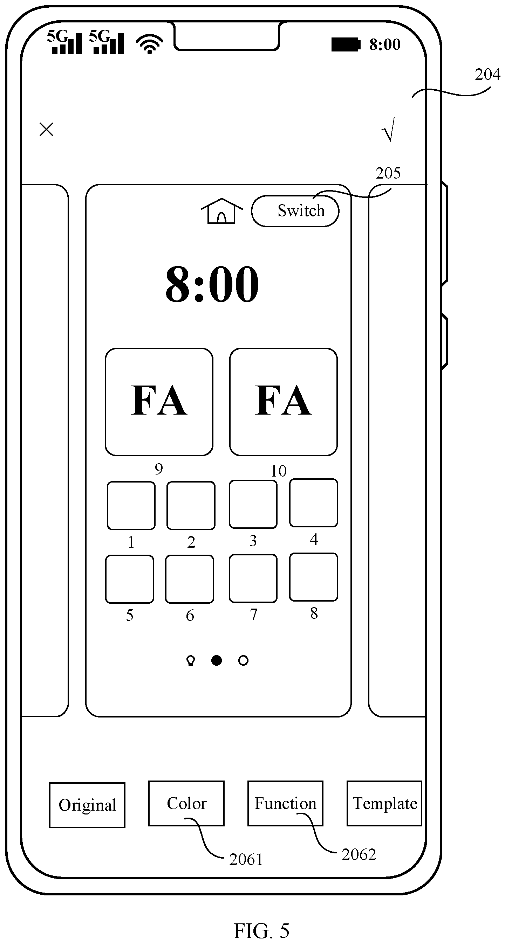

Further, as shown in FIG. 4, the classification-based layout adjustment button 206 includes a color classification-based layout adjustment button 2061 and a function-based layout adjustment button 2062. The user may select a corresponding button based on an actual requirement, to trigger a different classification-based layout adjustment function. Alternatively, as shown in FIG. 5, the smart desktop layout interface 204 of the electronic device may include a classification button 207. When the user taps the classification button 207, in response to the operation performed by the user on the classification button 207, the electronic device displays a classification-based layout adjustment interface 208. The classification-based layout adjustment interface 208 includes a color classification-based layout adjustment button 2071 and a function-based layout adjustment button 2072. Then, the user may perform an operation on the color classification-based layout adjustment button 2071 or the function-based layout adjustment button 2072, so that the electronic device adjusts a layout of the icons on all the display pages based on a color or a function.

In a possible implementation, the layout adjustment operation includes a single-page layout adjustment operation.

The determining a target adjustment page and a target adjustment rule in response to a layout adjustment operation of a user includes:
in response to the single-page layout adjustment operation of the user, determining, as the target adjustment page, a display page that is of the electronic device and that is selected by the user by using the single-page layout adjustment operation, and determining a single-page layout adjustment rule as the target adjustment rule, where the single-page layout adjustment rule includes a second icon classification sub-rule and a second display sub-rule.

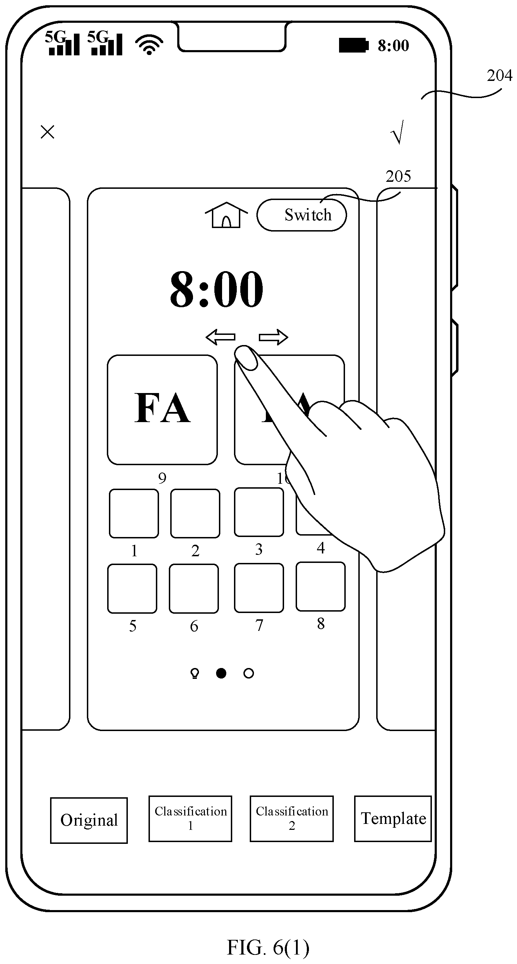

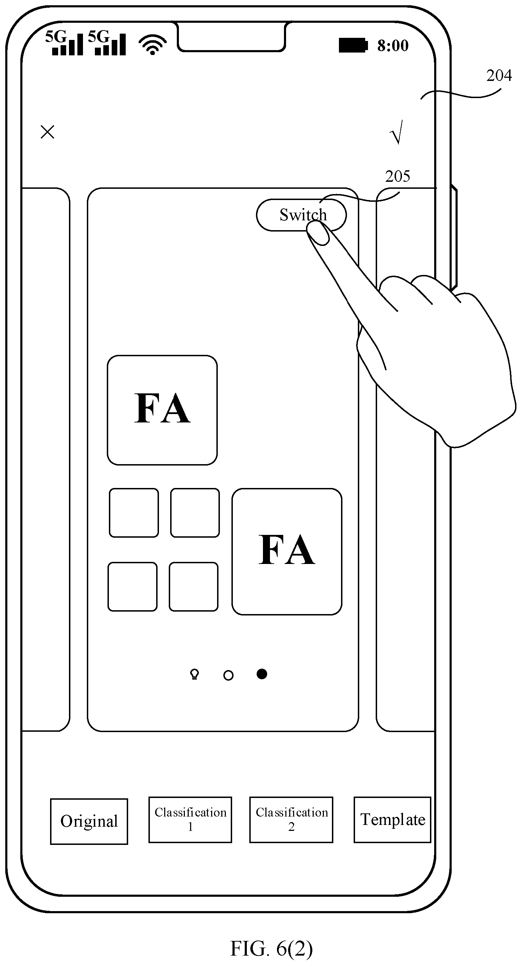

Specifically, FIG. 6(1) shows the smart desktop layout interface 204 of the electronic device. The user may slide left or right to select a page on which single-page layout adjustment needs to be performed, and the selected page is the target adjustment page. Then, as shown in FIG. 6(2), the user may tap the switch button 205 in the upper right corner to trigger the single-page layout adjustment function. In response to the single-page layout adjustment operation of the user, the display page that is of the electronic device and that is selected by the user by using the single-page layout adjustment operation is determined as the target adjustment page, and the single-page layout adjustment rule is determined as the target adjustment rule, where the single-page layout adjustment rule includes the second icon classification sub-rule and the second display sub-rule.

In a possible implementation, the layout adjustment operation includes a template-based layout adjustment operation.

The determining a target adjustment page and a target adjustment rule in response to a layout adjustment operation of a user includes:
obtaining a preset layout template in response to the template-based layout adjustment operation of the user, and displaying the preset layout template on the electronic device;
in response to a template selection operation of the user, determining all the display pages of the electronic device as target adjustment pages, and determining a to-be-used template; and
determining a template-based layout adjustment rule corresponding to the to-be-used template as the target adjustment rule.

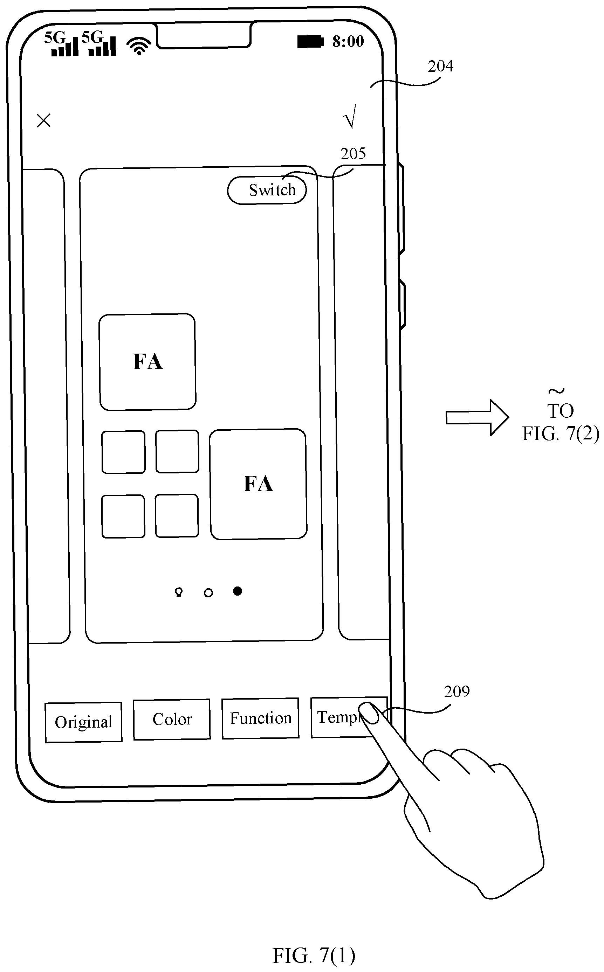

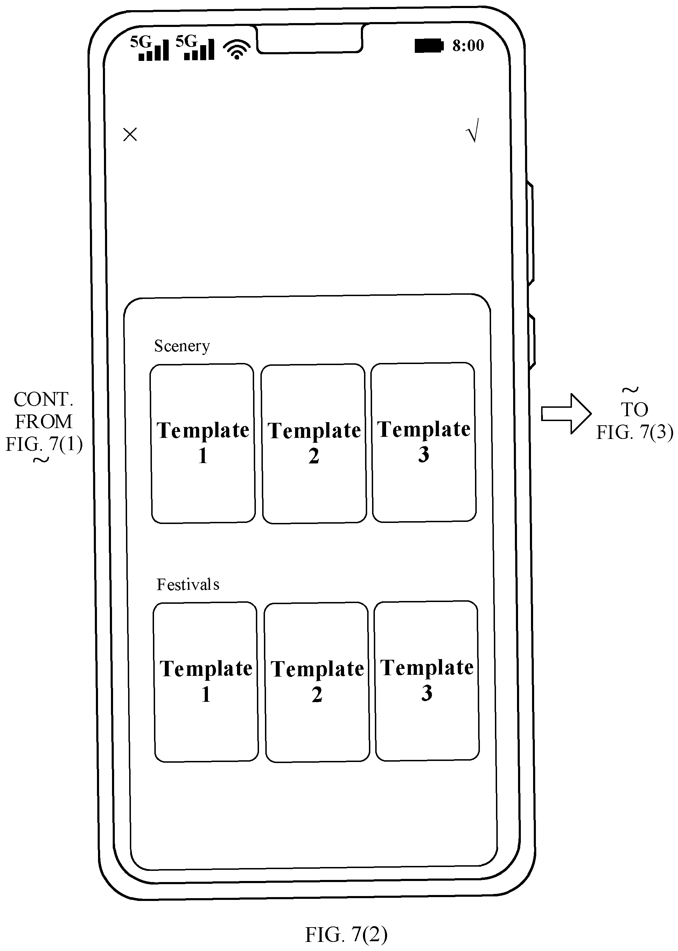

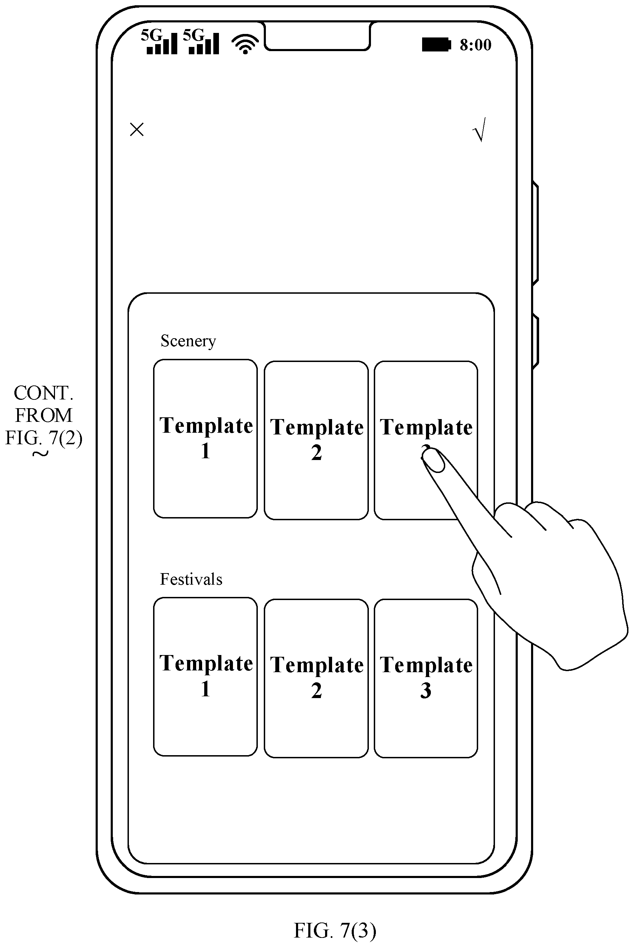

Specifically, the electronic device may further preset a plurality of layout templates. As shown in FIG. 7(1), the user may tap a template-based layout adjustment button 209 on the smart desktop layout interface 204, and in response to the template-based layout adjustment operation of the user, the electronic device obtains the preset layout templates. As shown in FIG. 7(2), the preset layout templates are displayed on the electronic device. As shown in FIG. 7(3), the user may select a required layout template. In response to the template selection operation of the user, the electronic device determines all the display pages of the electronic device as target adjustment pages, determines the layout template selected by the user as the to-be-used template, and determines a template layout rule corresponding to the to-be-used template as the target adjustment rule. For example, the template layout rule includes a target display position corresponding to each icon.

Step S102: Obtain an icon on the target adjustment page.

Specifically, after determining the target adjustment page, the electronic device may obtain the icon on the target adjustment page.

It should be noted that, because the user usually sets a widget corresponding to a weather clock on a first screen, namely, a 1^{st} display page, of the electronic device, for the user to view time and weather. In other words, the widget corresponding to the weather clock needs to be set on the 1^{st} page. Therefore, the electronic device may preset an area including upper two rows of the 1^{st} display page to display the widget corresponding to the weather clock. When the target adjustment page includes a widget corresponding to one weather clock, because the widget corresponding to the weather clock has the preset display area, only an icon other than the widget corresponding to the weather clock on the target adjustment page needs to be obtained. When the target adjustment page includes widgets corresponding to a plurality of weather clocks, a target widget is determined from the widgets corresponding to the plurality of weather clocks. The target widget may be randomly determined, or a widget in a front position may be determined as the target widget. Then, an icon other than the widget corresponding to a target weather clock on the target adjustment page is obtained. Subsequently, the target widget may be directly displayed in the preset display area.

Step S103: Determine a desktop layout of the electronic device.

Specifically, when an icon arrangement is performed, a quantity of grids on each display page of the electronic device needs to be determined. Therefore, the electronic device may determine the desktop layout of the electronic device. For example, the electronic device may record desktop layout information of the electronic device, and when necessary, directly obtain a recorded desktop layout of the electronic device. The desktop layout of the electronic device may be 4×6, 5×6, or the like. This is not limited in this application.

Step S104: Adjust an icon layout of the target adjustment page based on the desktop layout of the electronic device and the target adjustment rule, to obtain at least one target display page.

Each of the at least one target display page includes a plurality of application icons and another icon, the another icon includes at least one of a folder icon, a service card, or a widget, and the folder icon includes at least two application icons.

Specifically, the electronic device may adjust the icon layout of the target adjustment page based on the desktop layout of the electronic device and the target adjustment rule, to obtain the at least one target display page. According to different target adjustment rules, there are different manners of adjusting the icon layout of the target adjustment page, which are specifically as follows:
In a possible implementation, when the user performs the classification-based layout adjustment operation, the target adjustment page is all the display pages of the electronic device, the target adjustment rule is the classification-based layout adjustment rule, and the classification-based layout adjustment rule includes the first icon classification sub-rule and the first display sub-rule. The adjusting an icon layout of the target adjustment page based on the desktop layout of the electronic device and the target adjustment rule, to obtain at least one target display page includes:
classifying the icon on the target adjustment page according to the first icon classification sub-rule, to obtain at least one type of icon;
determining, based on the desktop layout of the electronic device, each type of icon, and the first display sub-rule, a first display page corresponding to each type of icon, a page display manner of each type of icon on the first display page, and whether to add the another icon, where the page display manner includes a full-screen display manner or a half-screen display manner;
determining a display priority corresponding to each type of icon; and
arranging, based on the page display manner of each type of icon on the first display page and whether to add the another icon, each type of icon to the first display page corresponding to each type of icon, to obtain a target display page.

Specifically, the electronic device may first determine type information of the icon on the target adjustment page according to the first icon classification sub-rule, and classify icons corresponding to a same type on the target adjustment page into one type, to obtain the at least one type of icon. Then, based on the desktop layout of the electronic device, each type of icon, and the first display sub-rule, the first display page corresponding to each type of icon, whether the display manner of each type of icon on the first display page is the full-screen display manner or the half-screen display manner, and whether the another icon, namely, the service card or the widget, needs to be added to the first display page are determined. Then, the display priority corresponding to each type of icon is determined. For each type of icon, use frequency information of an application corresponding to each application icon in the type of icon may be determined, and a highest use frequency is determined as a use frequency corresponding to the type. After the use frequency corresponding to each type is determined, the display priority corresponding to each type of icon is determined based on the use frequency corresponding to each type, where a higher use frequency indicates a higher display priority. Next, based on the page display manner of each type of icon on the first display page and whether to add the another icon, each type of icon is arranged to the first display page corresponding to each type of icon, to obtain the target display page.

It should be noted that, when determining the display priority corresponding to each type of icon, the electronic device may alternatively determine, based on another parameter, the display priority corresponding to each type of icon. For example, the electronic device may preset an application weight of each area on a display page. For example, a use weight of an icon on first two display pages is set to 2, and a use weight of an icon on another display page is set to 1. **In** this case, for each type of icon, a use weight of each icon in the type of icon may be determined based on a display position of the icon of the type on the target adjustment page, and then a total weight corresponding to the type of icon is determined. After the total weight corresponding to each type of icon is determined, the display priority corresponding to each type of icon is determined based on the total weight corresponding to each type of icon, where the display priority corresponding to each type of icon is in direct proportion to the total weight corresponding to each type of icon. Certainly, the electronic device may alternatively determine, in another manner, the display priority corresponding to each type of icon. This is not limited in this application.

It should be noted that, the electronic device presets the display area of the widget corresponding to the weather clock as the area including the first two rows on the first screen (the 1^{st} display page of the electronic device), and a type of icon with a corresponding highest display priority is also displayed on the first screen of the electronic device. If a display manner of the type of icon with the corresponding highest display priority on a first display page is the full-screen display manner, there is no vacant position on the first display page corresponding to the type for displaying the widget corresponding to the weather clock. Therefore, after the display priority corresponding to each type is determined, the page display manner of the type of icon with the highest display priority on the first display page needs to be determined. If the display manner of the type of icon on the first display page is the half-screen display manner, the electronic device may directly add the widget corresponding to the weather clock to an area including first two rows on the first display page, and arrange the type of icon in the remaining half-screen area. If the display manner of the type of icon on the first display page is the full-screen display manner, the electronic device may add the widget corresponding to the weather clock to an area including first two rows on the first display page, and select an icon whose use frequency exceeds a specific threshold from the type of icon and add the icon to the first display page. Then, a new first display page is added, and a remaining half-screen icon of the type is added to the newly added first display page. It is determined that a page display manner of the remaining icon of the type on the newly added first display page is the half-screen display manner, and it is re-determined whether to add a folder, the service card, or the widget.

Further, the classification-based layout adjustment rule further includes a half-screen combination rule.

Before the arranging, based on the page display manner of each type of icon on the first display page and whether to add the another icon, each type of icon to the first display page corresponding to each type of icon, to obtain a target display page, the method further includes:
determining, based on the page display manner of each type of icon on the first display page, whether there are at least two second display pages in the first display page corresponding to each type of icon, where a page display manner of the second display page is the half-screen display manner; and
if there are at least two second display pages, dividing the second display pages into at least one combined page group in pairs according to the half-screen combination rule, and for each combined page group, combining, based on display priorities of second display pages, a second display page with a lower priority into a second display page with a higher priority in the combined page group.

Specifically, it is assumed that a page display manner of a plurality of icons of at least one type on a first display page is the half-screen display manner, that is, there is only half-screen display content on a plurality of first display pages. To further improve aesthetics of a user desktop, before each type of icon is arranged on the first display page corresponding to each type of icon based on the page display manner of each type of icon on the first display page and whether to add the another icon, to obtain the target display page, half-screen combination may be performed. In this case, the electronic device may determine, based on the page display manner of each type of icon on the first display page, whether there are at least two second display pages in the first display page corresponding to each type of icon, where the page display manner of the second display page is the half-screen display manner. If there are at least two second display pages, it indicates that half-screen combination needs to be performed. In this case, according to the half-screen combination rule, the at least two second display pages are traversed, and two second display pages of similar types are determined as one combined page group, to obtain at least one combined page group. For example, it is assumed that the electronic device divides icons on the target adjustment page into three types of icons based on a color, and it is assumed that a display manner of a red-type icon on a first display page is the half-screen display manner, a display manner of a green-type icon on a first display page corresponding to the green-type icon is the half-screen display manner, and a display manner of a blue-type icon on a first display page corresponding to the blue-type icon is the half-screen display manner. Therefore, it may be determined, according to the half-screen combination rule, that blue-type and green-type icons are icons of similar types, and the first display page corresponding to the blue-type icon and the first display page corresponding to the green type are determined as a combined page group. For each combined page group, a second display page with a lower priority is combined into a second display page with a higher priority in the combined page group based on display priorities of second display pages. In this way, it can be ensured that there is no excessive first display page displayed in the half-screen manner, thereby improving aesthetics of the user desktop.

In a possible implementation, the classification-based layout adjustment operation may be a color classification-based layout adjustment operation, and the first icon classification sub-rule includes a dominant hue value range corresponding to each color type.

The classifying the icon on the target adjustment page according to the first icon classification sub-rule, to obtain at least one type of icon includes:
obtaining a dominant hue value of each icon on the target adjustment page;
determining a color type corresponding to the dominant hue value of each icon based on the first icon classification sub-rule and the dominant hue value of each icon; and
determining, based on the color type corresponding to the dominant hue value of each icon, icons corresponding to a same color type as icons of one type, to obtain the at least one type of icon.

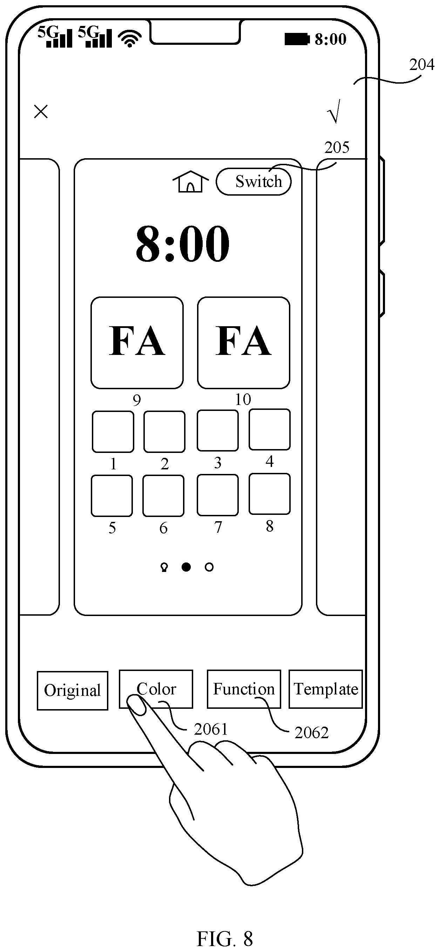

Specifically, FIG. 8 shows the smart layout adjustment page 204. The user performs an operation on the color classification-based layout adjustment button 2061 on the smart layout adjustment page 204. In response to the color classification-based layout adjustment operation of the user, the electronic device determines that the target adjustment page is all the display pages of the electronic device, and obtains the icons on all the display pages. Then, the dominant hue value of each icon is obtained. Because the first icon classification sub-rule includes the dominant hue value range corresponding to each color type, the color type corresponding to the dominant hue value of each icon is determined based on the first icon classification sub-rule and the obtained dominant hue value of each icon. Icons corresponding to a same color type are determined as icons of one type based on the color type corresponding to the dominant hue value of each icon, to obtain the at least one type of icon.

Further, the method further includes:
determining, based on a size of each type of icon in the at least one type of icon, a quantity of grids occupied by each type of icon in the at least one type of icon;
determining, based on the quantity of grids occupied by each type of icon, whether there is an icon of a first type in the at least one type of icon, where the icon of the first type is a type of icon whose quantity of occupied grids is less than a first preset threshold; and
if there are icons of at least two first types, combining the icons of the at least two first types into icons of one type.

Specifically, if a quantity of icons of a specific type is excessively small, displaying the icons on a display page makes the display page vacant and not aesthetic. Therefore, it may be considered that icons of types with excessively small quantities of icons are combined into icons of one type. The quantity of grids occupied by each type of icon in the at least one type of icon is determined based on the size of each type of icon in the at least one type of icon. Then, whether there is a type of icon whose quantity of occupied grids is less than the first preset threshold, namely, the icon of the first type, in the at least one type of icon is determined based on the quantity of grids occupied by each type of icon. If there are icons of at least two first types, it indicates that quantities of grids occupied by the icons of the at least two first types are excessively small, and an icon of each first type cannot be separately displayed on one display page. Therefore, the icons of the at least two first types may be combined into icons of one type. In this way, it can be ensured that a quantity of icons of each type is not excessively small.

In a possible implementation, when the user chooses to perform color classification-based layout adjustment, the icon on the target adjustment page includes at least one of an application icon, a service card, and a widget. The determining, based on the desktop layout of the electronic device, each type of icon, and the first display sub-rule, a first display page corresponding to each type of icon, a page display manner of each type of icon on the first display page, and whether to add the another icon includes:
determining a quantity of rows of the desktop layout of the electronic device and a quantity of grids of the desktop layout of the electronic device based on the desktop layout of the electronic device;
for each type of icon in the at least one type of icon, determining the quantity of occupied grids corresponding to the type of icon;
determining whether the type of icon includes a special icon, where the special icon includes the service card and the widget;
if the type of icon does not include the special icon, determining whether the quantity of occupied grids corresponding to the type of icon exceeds a second preset threshold, where the second preset threshold is greater than the first preset threshold;
if the quantity of occupied grids corresponding to the type of icon exceeds the second preset threshold, determining the first display page corresponding to the type, where the page display manner of the type of icon on the first display page is the full-screen display manner; and determining to add the folder icon and the service card or the widget;
if the quantity of occupied grids corresponding to the type of icon exceeds the first preset threshold and does not exceed the second preset threshold, determining the first display page corresponding to the type, where the page display manner of the type of icon on the first display page is the half-screen display manner; and determining to add the folder icon, the service card, or the widget;
if the type of icon includes the special icon, determining, based on the desktop layout of the electronic device and a size of the special icon in the type of icon, a quantity of rows occupied by the special icon in the type of icon;
determining whether the quantity of rows occupied by the special icon exceeds the quantity of rows of the desktop layout of the electronic device;
if the quantity of rows occupied by the special icon does not exceed the quantity of rows of the desktop layout of the electronic device, determining the first display page corresponding to the type of icon;
determining whether the quantity of grids occupied by the type of icon exceeds the quantity of grids of the desktop layout of the electronic device;
if the quantity of grids occupied by the type of icon exceeds the quantity of grids of the desktop layout of the electronic device, determining that the page display manner of the type of icon on the first display page is the full-screen display manner, and determining to add the folder icon;
if the quantity of grids occupied by the type of icon does not exceed the quantity of grids of the desktop layout of the electronic device and exceeds the second preset threshold, determining that the page display manner of the type of icon on the first display page is the full-screen display manner, and determining not to add the another icon;
if the quantity of grids occupied by the type of icon does not exceed the second preset threshold and exceeds the first preset threshold, determining the quantity of rows occupied by the special icon;
if the quantity of rows occupied by the special icon does not exceed a third preset threshold, determining that the page display manner of the type of icon on the first display page is the half-screen display manner, and determining not to add the another icon; and
if the quantity of rows occupied by the special icon exceeds the second preset threshold, determining that the page display manner of the type of icon on the first display page is the full-screen display manner, and determining not to add the another icon.

The method further includes:
if the quantity of rows occupied by the special icon exceeds the quantity of rows of the desktop layout of the electronic device, determining at least two first display pages corresponding to the type of icon, and an icon that is of the type and that needs to be displayed on each first display page; and
for each of the at least two first display pages, determining, based on the icon that is of the type and that needs to be displayed on the first display page, a page display manner, on the first display page, of the icon that is of the type and that needs to be displayed on the first display page and whether to add the another icon.

In this embodiment of this application, it is assumed that the user chooses to perform color classification-based layout adjustment. In response to the color classification-based layout adjustment operation of the user, the electronic device determines that the target adjustment page is all the display pages, and obtains the icon on the target adjustment page. The icon on the target adjustment page includes at least one of the application icon, the service card, and the widget. Then, the icon on the target adjustment page is classified according to the first icon classification sub-rule, to obtain the at least one type of icon, where each type of icon in the at least one type of icon includes at least one of the application icon, the service card, and the widget. After the classification, the electronic device may determine the first display page corresponding to each type of icon, the display manner of the type of icon on the first display page, and whether to add a folder. First, the electronic device may determine the quantity of rows of the desktop layout of the electronic device and the quantity of grids of the desktop layout of the electronic device based on the desktop layout. For example, it is assumed that the desktop layout of the electronic device is 6×4. In this case, it may be determined that the quantity of rows of the desktop layout of the electronic device is 6, a quantity of columns of the desktop layout is 4, and the quantity of grids of the desktop layout of the electronic device is 24.

For each type of icon in the at least one type of icon, it is determined whether the type of icon includes the service card and the widget. If the type of icon does not include the service card or the widget, it may be determined that there is only an application icon in the type of icon. In this case, it is determined whether the quantity of occupied grids corresponding to the type of icon exceeds the second preset threshold. If the quantity of occupied grids corresponding to the type of icon exceeds the second preset threshold, it indicates that there are too many application icons of the type, and some application icons may be included in a folder icon for display. A service card or a widget corresponding to the type may be added to a spare position, to enrich the entire first display page. Therefore, if the quantity of occupied grids corresponding to the type of icon exceeds the second preset threshold, the first display page corresponding to the type is determined, the page display manner of the type of icon on the first display page is the full-screen display manner, and it is determined to add the folder icon and the service card or the widget.

If the quantity of occupied grids corresponding to the type of icon exceeds the first preset threshold and does not exceed the second preset threshold, because the type of icon includes only the application icon, to avoid wasting space of the display page, it may be considered that the type of icon does not occupy the entire display page. In this case, it may be determined, based on a quantity of application icons of the type, to add the folder icon, the service card, or the widget. For example, when the quantity of occupied grids corresponding to the type of icon exceeds a half screen, it may be determined to add the folder icon, so that some application icons can be displayed in a folder, and the type of icon can be displayed on the half screen. When the quantity of occupied grids corresponding to the type of icon does not exceed a half screen, it may be determined to add the service card or the widget, so that content summarized on the display page is richer. Therefore, if the quantity of occupied grids corresponding to the type of icon exceeds the first preset threshold and does not exceed the second preset threshold, the first display page corresponding to the type is determined, the page display manner of the type of icon on the first display page is the half-screen display manner, and it is determined to add the folder icon, the service card, or the widget.

If the type of icon includes the special icon, because the special icon cannot be included in a folder icon for display, if the type of icon includes too many special icons that cannot be displayed on the display page, it is necessary to determine at least two first display pages that are used to display the type of icon, and determine content that needs to be displayed on each first display page, to further determine a page display manner of the type of icon on each first display page. Therefore, when the type of icon includes the special icon, the electronic device needs to determine, based on the desktop layout of the electronic device and the size of the special icon in the type of icon, the quantity of rows occupied by the special icon in the type of icon, and determine whether the quantity of rows occupied by the special icon exceeds the quantity of rows of the desktop layout of the electronic device. If the quantity of rows occupied by the special icon does not exceed the quantity of rows of the desktop layout of the electronic device, it indicates that the type of icon can be displayed on one display page. Therefore, one first display page corresponding to the type of icon may be determined. Then, it is determined whether the quantity of grids occupied by the type of icon exceeds the quantity of grids of the desktop layout of the electronic device. If the quantity of grids occupied by the type of icon exceeds the quantity of grids of the desktop layout of the electronic device, it indicates that there are too many application icons in the type of icon. If the icons are directly arranged on the first display page, not all the icons can be displayed on the first display page. Therefore, it may be determined that the page display manner of the type of the icon on the first display page is the full-screen display manner, and it is determined to add a folder icon to the first display page, so that all or some application icons may be subsequently displayed in the added folder icon, and the type of icon can be displayed on one first display page. If the quantity of grids occupied by the type of icon does not exceed the quantity of grids of the desktop layout of the electronic device and exceeds the second preset threshold, it indicates that the type of icon may be displayed on the entire first display page, that is, it is determined that the page display manner of the type of icon on the first display page is the full-screen display manner. In addition, because the quantity of grids occupied by the type of icon does not exceed the quantity of grids of the desktop layout of the electronic device, the type of icon may be directly displayed on the first display page, and some application icons of the type do not need to be included in a folder icon for display. Further, there is a service card or icon already in the type of icon, and content is rich enough. Therefore, it may be determined not to add another icon. If the quantity of grids occupied by the type of icon does not exceed the second preset threshold and exceeds the first preset threshold, it indicates that the type of icon may be displayed on a half display page. Therefore, in this case, the quantity of rows occupied by the special icon may be first determined. If the quantity of rows occupied by the special icon does not exceed the third preset threshold, it indicates that the type of icon may be displayed on the half display page. Therefore, it is determined that the page display manner of the type of icon on the first display page is the half-screen display manner, and it is determined not to add another icon. If the quantity of rows occupied by the special icon exceeds the second preset threshold, it indicates that all icons of the type cannot be displayed on the half display page. Therefore, it is determined that the page display manner of the type of icon on the first display page is the full-screen display manner, and it is determined not to add another icon.

If the quantity of rows occupied by the special icon exceeds the quantity of rows of the desktop layout of the electronic device, it indicates that the special icon in the type of icon cannot be displayed on one display page. Therefore, at least two first display pages are required to display the type of icon. In this case, the electronic device may determine, based on the quantity of rows occupied by the special icon of the type, a smallest quantity of required first display pages for displaying the special icon of the type. For example, the quantity of rows of the desktop layout of the electronic device is 6, and the quantity of rows occupied by the special icon of the type is 10. In this case, it may be determined that the quantity of rows (10 rows) occupied by the special icon of the type exceeds the quantity of rows (6 rows) occupied by one first display page, but does not exceed a total quantity of rows (12 rows) of two first display pages. Therefore, two first display pages corresponding to the type of icon may be determined. A special icon occupying first six rows in special icons is determined as content that needs to be displayed on a 1^{st} first display page, a corresponding page display manner is the full-screen display manner, and another icon does not need to be added. An icon other than the icon in the first six rows in the type of icon is determined as an icon that needs to be displayed on a 2^{nd} first display page. In addition, a page display manner of the icon that needs to be displayed on the 2^{nd} first display page on the first display page and whether to add another icon are determined according to the manner described in the foregoing embodiments. For details, refer to the foregoing embodiments. Details are not described herein again.

It should be noted that the first preset threshold, the second preset threshold, and the third preset threshold may be set based on an actual requirement. This is not limited in this application. For example, it is assumed that the desktop layout of the electronic device is row×column, that is, Row×Col. In this case, the first preset threshold may be Col×2-2, the second preset threshold may be Col×(Row-2), and the third preset threshold is Row-2.

In a possible implementation, the classification-based layout adjustment rule further includes a first preset arrangement sub-rule.

The arranging, based on the page display manner of each type of icon on the first display page and whether to add the another icon, each type of icon to the first display page corresponding to each type of icon, to obtain a target display page includes:
for each type of icon in the at least one type of icon, determining, based on the page display manner of the type of icon on the first display page and whether to add the another icon, target display content on the first display page corresponding to the type of icon, where the target display content includes all or a part of the type of icon, or includes all or a part of the type of icon and another added icon;
determining display position information of the target display content based on the target display content and the first preset arrangement sub-rule; and
arranging, based on the target display content and the display position information of the target display content, the target display content to the first display page corresponding to the type of icon, to obtain the target display page corresponding to the type of icon.

Specifically, after the first display page corresponding to each type of icon, the display manner of the type of icon on the first display page, and whether to add the another icon are determined, the target display content on the first display page corresponding to the type of icon may be determined based on the determined first display page corresponding to each type of icon, the display manner of the type of icon on the first display page, and whether to add the another icon. When the type of icon corresponds to one first display page, the display manner of the type of icon on the first display page is the full-screen display manner, and a folder icon, a service card, or a widget needs to be added, the electronic device may obtain a preset service card and widget corresponding to the type. Because sizes of the preset service card and widget corresponding to the type are different, it needs to be determined, based on a quantity of application icons of the type, a size of the application icon, and the desktop layout of the electronic device, a folder icon, for example, a 2×2 large folder icon (occupying four grids), or a service card or widget to be added to the first display page, to determine that the target display content that is on the first display page and that corresponds to the type of icon is all icons of the type, the determined to-be-added folder icon, and the determined to-be-added service card or widget. In addition, an application icon arranged in the folder icon and an application icon that is separately displayed on the first display page further need to be determined. For example, it is assumed that a quantity of rows of the first display page is Row, and a quantity of columns is Col. The display content on the first display page may be the 2×2 large folder icon, a 2×2 service card or widget, and scattered (Row-1)×(Col-8) application icons of the type; and other application icons are arranged in the 2×2 large folder icon. Alternatively, the display content may be the 2×2 large folder icon, a 2×4 service card or widget, and scattered (Row×Col-12) application icons of the type; and other application icons of the type are arranged in the 2×2 large folder icon.

When the type of icon corresponds to one first display page, the display manner of the type of icon on the first display page is the half-screen display manner, and a folder icon, a service card, or a widget icon needs to be added, the electronic device may determine a quantity of application icons in the type of icon. If the quantity of application icons in the type of icon exceeds a fifth preset threshold, it is determined to add a folder icon, and the electronic device adds the folder icon, for example, a 2×2 large folder icon (occupying four grids), to the first display page. In this case, the target display content on the first display page corresponding to the type of icon is all icons of the type and the added folder icon. Some icons in the type of icon are displayed in the folder icon, and the other icons are scattered on the first display page. If the quantity of application icons in the type of icon does not exceed the fifth preset threshold, it is determined to add a service card or a widget, and the electronic device obtains a preset service card and widget that correspond to the type, determines a to-be-added service card from the preset service card corresponding to the type, for example, a 2×2 service card, and adds the to-be-added service card to the first display page. In this case, the first display page corresponding to the type of icon includes the 2×2 service card and the scattered application icons of the type.

When the type of icon corresponds to one first display page, the display manner of the type of icon on the first display page is the full-screen display manner, and a folder icon needs to be added, because the type of icon includes the special icon (a service card or a widget), a large folder icon may fail to be added. Therefore, it needs to be determined to add a large folder icon or a small folder icon. In this case, the electronic device may determine, based on the desktop layout of the electronic device, a quantity of icons of the type, and a size of the icon, whether the large folder icon or the small folder icon can be added.

When the type of icon corresponds to one first display page, the display manner of the type of icon on the first display page is the full-screen display manner, and another icon does not need to be added, the target display content on the first display page corresponding to the type of icon is all icons of the type.

When the type of icon corresponds to one first display page, the display manner of the type of icon on the first display page is the half-screen display manner, and another icon does not need to be added, the target display content on the first display page corresponding to the type of icon is all icons of the type.

After the target display content on the first display page corresponding to the type of icon is determined, to improve aesthetics of the first display page, a position of the target display content on the first display page may be adjusted. In this case, the electronic device may first determine the display position information of the target display content on the first display page according to the first preset arrangement sub-rule, and arrange, based on the target display content and the display position information of the target display content, the target display content on the first display page corresponding to the type of icon, to obtain the target display page corresponding to the type of icon. The first arrangement sub-rule may include performing an arrangement based on a size of an icon, or performing a gradient arrangement based on a dominant hue value of an icon, or the like. For example, the electronic device may arrange, on the first display page, icons in the target display content corresponding to the first display page in descending order of sizes of the icons. For icons of a same size, an icon with a high use frequency is first arranged on the first display page based on use frequencies of applications corresponding to the icons. Icons in a folder are sorted in descending order of use frequencies of applications corresponding to the icons. Certainly, the icons in the target display content corresponding to the first display page may alternatively be arranged according to another arrangement rule. This is not limited in this application.

It may be understood that, when the type of icon needs to be displayed on at least two first display pages because there are too many special icons in the type of icon, it is dull to arrange only a service card on one first display page. Therefore, icons on the at least two first display pages may be re-arranged according to a principle of arranging a special icon and an application icon in a mixed manner and arranging a large-sized icon in front.

In a possible implementation, the classification-based layout adjustment operation includes a function classification-based layout adjustment operation, the first icon classification sub-rule includes at least two first function categories, each of the at least two first function categories includes at least two second function categories, and each of the at least two second function categories corresponds to at least one application icon and/or other icon.

The classifying the icon on the target adjustment page according to the first icon classification sub-rule, to obtain at least one type of icon includes:
obtaining a first function category corresponding to the icon on the target adjustment page; and
determining, based on the first function category corresponding to the icon on the target adjustment page, icons corresponding to a same first function category as icons of one type, to obtain the at least one type of icon.

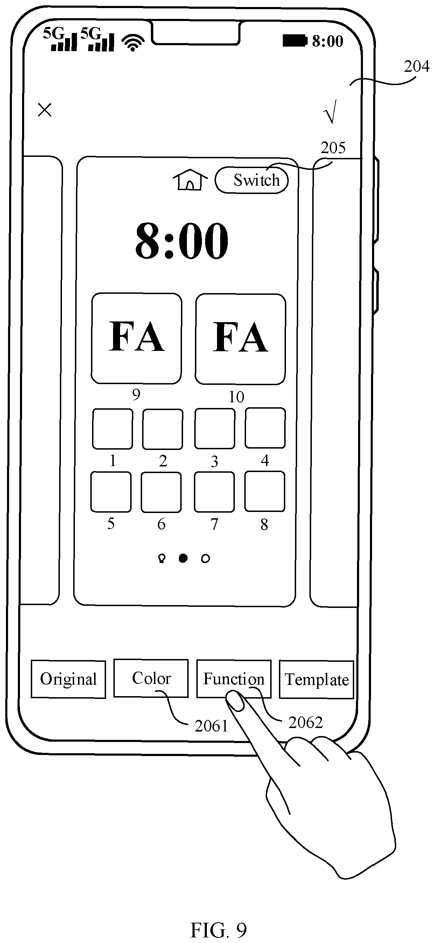

Specifically, the electronic device may pre-classify all icons into a plurality of first function categories, for example, entertainment, learning, life, food and travel, and social news. Icons of each first function category may be further classified as icons of a plurality of second function categories. For example, icons of the entertainment category include icons of categories such as games, audios and videos, and image shooting; icons of a learning office category include icons of categories such as business, finance, education, and reading; icons of the life category include icons of categories such as shopping, health, tools, and vehicles; and icons of the social news category include icons of categories such as social and news. FIG. 9 shows the smart layout adjustment page 204. The user performs an operation on the function classification-based layout adjustment button 2062 on the smart layout adjustment page 204. In response to the function classification-based layout adjustment operation of the user, the electronic device determines that the target adjustment page is all the display pages of the electronic device, and obtains the icons on all the display pages. When obtaining the icons on all the display pages, the electronic device may obtain attribute information corresponding to the icons at the same time, where the attribute information of the icons includes a first function category and a second function category corresponding to the icons. Therefore, the electronic device may determine, based on the attribute information corresponding to each icon, a first function category corresponding to each icon, and determine icons belonging to a same first function category as icons of one type, to obtain the at least one type of icon.

In a possible implementation, the icon on the target adjustment page includes one or more of an application icon, a service card, and a widget.

The determining, based on the desktop layout of the electronic device, each type of icon, and the first display sub-rule, a first display page corresponding to each type of icon, a page display manner of each type of icon on the first display page, and whether to add the another icon includes:
determining a quantity of rows of the desktop layout of the electronic device based on the desktop layout of the electronic device;
for each type of icon in the at least one type of icon, determining a second function category of an application icon in the type of icon;
determining, based on a second function category corresponding to each application icon in the type of icon, application icons corresponding to a same second function category in the type of icon as application icons of one second type, to obtain application icons of at least one second type;
determining, based on a quantity of application icons of the at least one second type, a quantity of folder icons to be added to the first display page corresponding to the type and a size of the to-be-added folder icon;
determining, based on the desktop layout of the electronic device and a size of a special icon in the type of icon, a quantity of rows occupied by the special icon in the type of icon, where the special icon includes the service card and the widget;
if the quantity of rows occupied by the special icon does not exceed the quantity of rows of the desktop layout of the electronic device, determining the first display page corresponding to the type of icon;
determining, based on the quantity of folder icons to be added to the first display page and the size of the to-be-added folder icon, a quantity of rows occupied by the special icon and the to-be-added folder icon on the first display page;
if the quantity of rows occupied by the special icon and the to-be-added folder icon on the first display page exceeds the quantity of rows of the desktop layout of the electronic device, determining that the page display manner of the type of icon on the first display page is the full-screen display manner, and determining to reduce the size of the to-be-added folder icon;
if the quantity of rows occupied by the special icon and the to-be-added folder icon on the first display page exceeds a fourth preset threshold and does not exceed the quantity of rows of the desktop layout of the electronic device, determining that the page display manner of the type of icon on the first display page is the full-screen display manner, where the fourth preset threshold is less than the quantity of rows of the desktop layout of the electronic device; and
if the quantity of rows occupied by the special icon and the to-be-added folder icon on the first display page does not exceed the fourth preset threshold, determining that the page display manner of the type of icon on the first display page is the half-screen display manner.

The method further includes: if the quantity of rows occupied by the special icon exceeds the quantity of rows of the desktop layout of the electronic device, determining at least two first display pages corresponding to the type of icon, an icon that is of the type and that needs to be displayed on each first display page, and a folder icon that needs to be added; and
for each of the at least two first display pages, determining, based on the icon that is of the type and that needs to be displayed on the first display page and the folder icon that needs to be added, a page display manner, on the first display page, of the icon that is of the type and that needs to be displayed on the first display page and the folder icon that needs to be added.

Specifically, during function classification-based layout adjustment, the electronic device needs to re-classify application icons in each type of icon, determine application icons of at least one same second function type, and then add an application icon of each second function type to a folder icon for display. In this way, the user can quickly find a position of a required icon based on different folder icons on each page or functions of application icons in the folder icon. Based on this, the electronic device determines the quantity of rows of the desktop layout of the electronic device based on the desktop layout of the electronic device. Then, for each type of icon, the electronic device may determine the second function category of the application icon in the type of icon, and determine application icons corresponding to a same second function category in the type of icon as icons of one second type, to obtain application icons of the at least one second type. Because one folder icon needs to be added for icons of each second type, a quantity of to-be-added folder icons may be determined based on a quantity of types of the application icons of the at least one second type, and a size of the folder icon to be added to a first display page corresponding to each second type may be determined based on a quantity of application icons of the type. For example, when the quantity of icons is greater than 2 and less than 5, it is determined to add a 1×2 large folder icon. When the quantity of icons is greater than or equal to 5, it is determined to add a 2×2 large folder icon. If the type of icon includes icons of a plurality of second types, and a large folder is added for each icon, the icons cannot be placed on one display page. Therefore, the electronic device needs to determine whether the type of icon and the added large folder icon can be displayed on one display page after the large folder icon is added. In this case, the electronic device determines, based on the desktop layout of the electronic device and the size of the special icon in the type of icon, the quantity of rows occupied by the special icon in the type of icon, where the special icon includes the service card and the widget. If the quantity of rows occupied by the special icon does not exceed the quantity of rows of the desktop layout of the electronic device, it indicates that the type of icon can be displayed on one first display page. In this case, the first display page corresponding to the type of icon may be determined. Then, it needs to be determined whether an area other than an area occupied by the special icon of the type on the first display page is sufficient for placing the folder icon that needs to be added. In this case, the electronic device determines, based on the quantity of folder icons to be added to the first display page and the size of the to-be-added folder icon, the quantity of rows occupied by the special icon and the to-be-added folder icon on the first display page. If the quantity of rows occupied by the special icon and the to-be-added folder icon on the first display page exceeds the quantity of rows of the desktop layout of the electronic device, it indicates that if all the to-be-added folder icons are large folder icons, the special icon of the type and the to-be-added folder icons cannot be displayed on one first display page. In this case, it is determined that the page display manner of the type of icon on the first display page is the full-screen display manner, and it is determined to reduce the size of the to-be-added folder icon. If the quantity of rows occupied by the special icon and the to-be-added folder icon on the first display page exceeds the fourth preset threshold, and does not exceed the quantity of rows of the desktop layout of the electronic device, it indicates that the special icon of the type and the to-be-added folder icon can be displayed on one first display page, and it may be determined that the page display manner of the type of icon on the first display page is the full-screen display manner. The fourth preset threshold is less than the quantity of rows of the desktop layout of the electronic device. If the quantity of rows occupied by the special icon and the to-be-added folder icon on the first display page does not exceed the fourth preset threshold, it indicates that the special icon of the type and the to-be-added folder icon may be displayed on a half of the first display page. Therefore, it may be determined that the page display manner of the type of icon on the first display page is the half-screen display manner.

If the quantity of rows occupied by the special icon exceeds the quantity of rows of the desktop layout of the electronic device, it indicates that there are too many special icons in the type of icon, and the type of icon cannot be displayed on one first display page. Therefore, at least two first display pages corresponding to the type of icon, the icon that is of the type and that needs to be displayed on each first display page, and the folder icon that needs to be added are determined. For each of the at least two first display pages, the page display manner, on the first display page, of the icon that is of the type and that needs to be displayed on the first display page and the folder icon that needs to be added is determined based on the icon that is of the type and that needs to be displayed on the first display page, the folder icon that needs to be added, and the application icon that needs to be displayed on the folder icon. For details, refer to the foregoing embodiments. Details are not described herein again.

Further, before the determining, based on a quantity of application icons of the at least one second type, a quantity of folder icons to be added to the first display page and a size of the to-be-added folder icon, the method includes:
determining a quantity of application icons of each second type in the application icons of the at least one second type;
determining, based on the quantity of application icons of each second type, whether there are application icons of at least two third types in the application icons of the at least one second type, where a quantity of application icons of the third types is less than a preset icon quantity threshold; and
if there are application icons of at least two third types, combining the application icons of the at least two third types in pairs into application icons of one second type.

Specifically, because there may be a case in which there are a few application icons of a second type, it is unnecessary to add a folder icon for classification. In this case, application icons of second types with small quantities may be combined, and then only one folder icon needs to be added for combined application icons of a second type. Therefore, the electronic device may first determine the quantity of application icons of the at least one second type, and determine, based on the quantity of application icons of each second type, whether there are application icons of at least two third types whose quantities of application icons are less than a preset icon quantity threshold in the application icons of the at least one second type. The preset icon quantity threshold may be set based on an actual requirement. This is not limited in this application. For example, the preset icon quantity threshold may be 2. If there are application icons of at least two third types, the application icons of the at least two third types are combined in pairs into application icons of one second type.

In a possible implementation, the method further includes:
if the page display manner of the type of icon on the first display page is the half-screen display manner, obtaining an addable icon, where the addable icon includes a preset addable service card and widget;
determining a target to-be-added icon from the addable icon; and
determining the target to-be-added icon as another icon to be added to the first display page corresponding to the type, and updating the page display manner of the type of icon on the first display page to the full-screen display manner.

Specifically, the electronic device may preset the addable icon, including an addable service card and widget. For each type of icon, if the page display manner of the type of icon on the first display page is the half-screen display manner, the electronic device may obtain a preset addable icon, and determine a target addable icon from the addable icon. In this case, one addable icon may be randomly selected as the target addable icon, or an addable icon corresponding to the type may be selected. Certainly, another selection manner may be used. This is not limited in this application. Then, the target to-be-added icon is determined as another icon to be added to the first display page corresponding to the type, and the page display manner of the type of icon on the first display page is updated to the full-screen display manner. In this way, content on the first display page corresponding to the type can be richer, and user experience can be improved.

In a possible implementation, the classification-based layout adjustment rule further includes a second preset arrangement sub-rule.

The arranging, based on the page display manner of each type of icon on the first display page and whether to add the another icon, each type of icon to the first display page corresponding to each type of icon, to obtain a target display page includes:
for each type of icon, determining, based on the page display manner of each type of icon on the first display page and whether to add the another icon, target display content on the first display page corresponding to the type, where the target display content includes all or a part of the type of icon and another added icon, and the another added icon includes an added folder icon, or an added folder icon and the target to-be-added icon;
determining display position information of the target display content based on the target display content and the second preset arrangement sub-rule; and
arranging, based on the display position information of the target display content, the target display content to the first display page corresponding to the type, to obtain the target display page corresponding to the type of icon.

Specifically, after the page display manner of each type of icon on the first display page and whether to add the another icon are determined, for each type of icon, the target display content is determined based on the determined result. The target display content includes all or a part of the type of icon and the another added icon, and the another added icon includes the added folder icon, or the added folder icon and the target to-be-added icon. In this case, the corresponding folder icon, and/or the corresponding target to-be-added icon, and an application icon of a corresponding second type included in each folder icon may be added to the first display page corresponding to the type of icon. Then, the display position information of the target display content is determined based on the determined target display content and the second preset arrangement sub-rule, and the target display content is arranged, based on the display position information of the target display content, on the first display page corresponding to the type, to obtain the target display page corresponding to the type of icon. The second preset arrangement sub-rule includes: performing an arrangement based on a size of an icon; performing an arrangement according to a rule that a service card and a folder appear alternately; for icons of a same size, determining weights corresponding to the icons, and arranging an icon with a larger weight in a front position; and for icons in a folder, determining weights corresponding to the icons, and sorting the icons in descending order. When the weight of the icon is determined, a use frequency corresponding to the icon may be obtained, and the weight of the icon may be determined based on the use frequency corresponding to the icon. Alternatively, the weight corresponding to the icon may be determined according to another rule. This is not limited in this application.

In a possible implementation, the layout adjustment operation includes a single-page layout adjustment operation.

The adjusting an icon layout of the target adjustment page based on the desktop layout of the electronic device and the target adjustment rule, to obtain at least one target display page includes:
obtaining a current icon layout of the target adjustment page; and
adjusting the icon layout of the target adjustment page based on the icon on the target adjustment page, the current icon layout of the target adjustment page, the second icon classification sub-rule, the second display sub-rule, and the desktop layout of the electronic device, to obtain a target display page, where an icon layout of the target display page is different from the current icon layout of the target adjustment page.

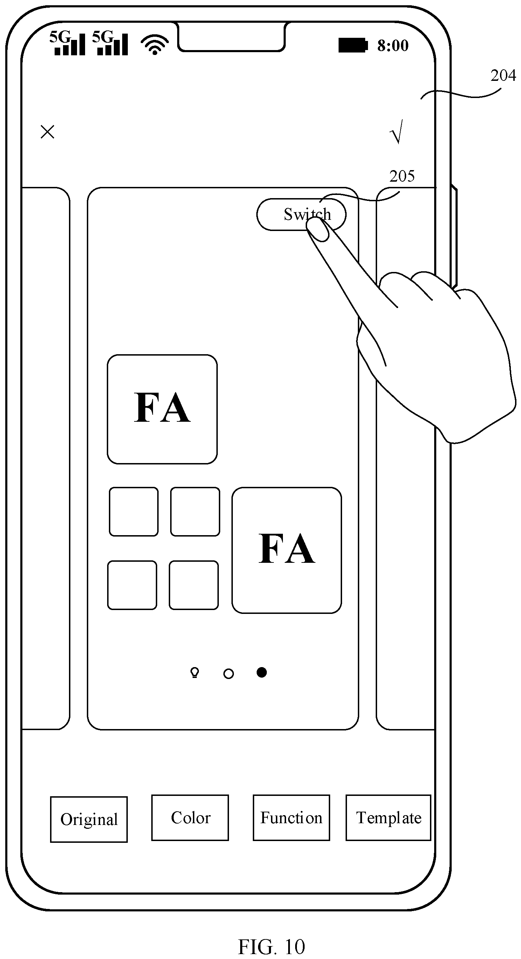

Specifically, FIG. 10 shows the layout adjustment page 204 of the electronic device. The user may perform an operation on the switch button 205 in the upper right corner of the layout adjustment page 204, to trigger the single-page layout adjustment function of the electronic device. In response to the single-page layout adjustment operation, the electronic device may obtain the current icon layout of the target adjustment page. The icon layout of the target adjustment page is adjusted based on the icon on the target adjustment page, the current icon layout of the target adjustment page, the second icon classification sub-rule, the second display sub-rule, and the desktop layout of the electronic device, to obtain the target display page, where the icon layout of the target display page is different from the current icon layout of the target adjustment page.

Further, the adjusting the icon layout of the target adjustment page based on the icon on the target adjustment page, the current icon layout of the target adjustment page, the second icon classification sub-rule, the second display sub-rule, and the desktop layout of the electronic device, to obtain a target display page includes:
adjusting the icon layout of the target adjustment page based on the icon on the target adjustment page, the current icon layout of the target adjustment page, the second icon classification sub-rule, the second display sub-rule, and the desktop layout of the electronic device, to obtain at least one to-be-used display page, where an icon layout of the at least one to-be-used display page is different from the current icon layout of the target adjustment page;
determining a priority of the at least one to-be-used display page based on the current icon layout of the target adjustment page and the icon layout of the at least one to-be-used display page; and
determining a to-be-used display page with a highest priority in the at least one to-be-used display page as the target display page.

Specifically, the electronic device may perform a plurality of different adjustments on the icon on the target adjustment page based on the icon on the target adjustment page, the current icon layout of the target adjustment page, the second icon classification sub-rule, the second display sub-rule, and the desktop layout of the electronic device, to obtain a plurality of different to-be-used display pages. Therefore, to improve user experience, the electronic device may generate a plurality of to-be-used display pages, and then may select, from the plurality of to-be-used display pages, a to-be-used display page whose icon layout is the most different from the icon layout of the target adjustment page as the target display page. In this case, the electronic device may determine the priority of the at least one to-be-used display page based on the current icon layout of the target adjustment page and the icon layout of the at least one to-be-used display page. For example, a quantity C of tail-row spacings and a quantity R of spare rows of each to-be-used display page may be calculated. If there is no to-be-used display page whose quantity of spare rows is 0<R≤2, it is determined that a to-be-used display page whose quantity R of spare rows is the smallest has a highest priority. If there is at least one to-be-used display page whose quantity of spare rows is 0<R≤2, it is determined, based on a quantity C of tail-row spacings of the at least one to-be-used display page whose quantity of spare rows is 0<R≤2, that a to-be-used display page whose quantity C of tail-row spacings is the smallest has a highest priority. Certainly, the priority of each to-be-used display page may alternatively be determined in another manner, provided that it is ensured that an icon layout of a determined target display page is different from the current icon layout of the target adjustment page, and content on the target display page is richer. This is not limited in this application.

In a possible implementation, the determining a to-be-used display page with a highest priority in the at least one to-be-used display page as the target display page includes:
determining a display sequence in the to-be-used display page in descending order of priorities based on the priority of the to-be-used display page; and
determining a 1^{st} to-be-used display page as the target display page based on the display sequence in the to-be-used display page.

In a possible implementation, the determining a priority of the at least one to-be-used display page based on the current icon layout of the target adjustment page and the icon layout of the at least one to-be-used display page includes:
determining a difference between an icon layout of each of the at least one to-be-used display page and the current icon layout of the target adjustment page based on the current icon layout of the target adjustment page and the icon layout of the at least one to-be-used display page; and
determining the priority of the at least one to-be-used display page based on the difference between the icon layout of each of the at least one to-be-used display page and the current icon layout of the target adjustment page, where the priority of the at least one to-be-used display page is in direct proportion to the difference between the icon layout of each of the at least one to-be-used display page and the current icon layout of the target adjustment page.

Specifically, for the icon layout of each of the at least one to-be-used display page, the electronic device may calculate, based on the icon layout of the to-be-used display page and the current icon layout of the target adjustment page, a difference between a current position of an icon on the target adjustment page and a display position of the icon on the to-be-used page, and then determine, based on a difference between a current position of each icon on the target adjustment page and a corresponding display position of the icon on the to-be-used page, the difference between the icon layout of the to-be-used display page and the current icon layout of the target adjustment page. In addition, the priority of the at least one to-be-used display page is determined based on the difference between the icon layout of each of the at least one to-be-used display page and the current icon layout of the target adjustment page and a proportional relationship, where a larger difference indicates a higher priority.

In a possible implementation, the single-page layout adjustment rule further includes a third preset arrangement sub-rule.

The determining at least one to-be-used display page based on the icon on the target adjustment page, the current icon layout of the target adjustment page, the second icon classification sub-rule, the second display sub-rule, and the desktop layout of the electronic device includes:
determining a third display page based on the desktop layout of the electronic device;
determining whether there is an adjustable icon in the icon on the target adjustment page, where the adjustable icon includes a service card or a widget whose size is adjustable;
if it is determined that there is no adjustable icon, obtaining type information of an application icon in the icon on the target adjustment page; and performing, according to the second icon classification sub-rule, folder classification on at least two application icons whose type information is the same, to determine at least one to-be-added folder icon;
determining whether there is a folder icon whose size is adjustable in the icon on the target adjustment page;
if there is a folder icon whose size is adjustable, adjusting the size of the folder icon on the target adjustment page, to obtain an adjusted folder icon; and
arranging the at least one to-be-added folder icon and the icon on the target adjustment page to the third display page according to the third preset arrangement sub-rule, to obtain the at least one to-be-used display page.

The method further includes: if it is determined that there is an adjustable icon in the icon on the target adjustment page, adjusting a size of the adjustable icon on the target adjustment page, to obtain an adjusted icon on the target adjustment page;
determining a quantity of rows occupied by the adjusted icon on the target adjustment page;
if the quantity of rows occupied by the adjusted icon on the target adjustment page does not exceed a quantity of rows of the desktop layout of the electronic device, determining, based on the desktop layout of the electronic device, the adjusted icon on the target adjustment page, and the second icon classification sub-rule, whether to add a folder; and
arranging, based on the third preset arrangement sub-rule and a determined result of whether to add the folder, the adjusted icon on the target adjustment page to the third display page, to obtain the at least one to-be-used display page.

Specifically, the electronic device may determine the third display page based on the desktop layout of the electronic device. During the single-page layout adjustment, to make an adjusted icon layout different from the icon layout of the target adjustment page, the electronic device may perform folder classification on the icon on the target adjustment page, and may further adjust a size of the folder, the service card, the widget, and the like whose size is adjustable on the target adjustment page, to change the icon layout of the target adjustment page. In this case, the electronic device may determine whether there is an adjustable icon in the icon on the target adjustment page. The adjustable icon includes the service card or the widget whose size is adjustable. If it is determined that there is no adjustable icon, folder classification is considered for the application icon. In this case, type information of the application icon in the icon on the target adjustment page may be obtained, and folder classification is performed, according to the second icon classification sub-rule, on at least two application icons whose type information is the same, to determine at least one to-be-added folder icon. It is determined whether there is a folder icon whose size is adjustable in the icon on the target adjustment page. If there is a folder icon whose size is adjustable, a size of the folder icon on the target adjustment page is adjusted, to obtain an adjusted folder icon. For example, if the icon on the target adjustment page includes a small folder icon, the small folder icon is adjusted to a large folder icon. The at least one to-be-added folder icon and the icon on the target adjustment page are arranged to the third display page according to the third preset arrangement sub-rule, to obtain the at least one to-be-used display page. The third preset arrangement rule may be the same as or different from the second preset arrangement sub-rule, and may be set based on an actual requirement. This is not limited in this application.

If it is determined that there is an adjustable icon in the icon on the target adjustment page, a size of the adjustable icon on the target adjustment page is adjusted, to obtain an adjusted icon on the target adjustment page, and a quantity of rows occupied by the adjusted icon on the target adjustment page is determined. If the quantity of rows occupied by the adjusted icon on the target adjustment page does not exceed a quantity of rows of the desktop layout of the electronic device, folder classification is performed, based on the desktop layout of the electronic device, the adjusted icon on the target adjustment page, and the second icon classification sub-rule, on at least two application icons whose type information is the same, to determine whether to add a folder icon. Based on the third preset arrangement sub-rule and a determined result of whether to add a folder, the adjusted icon on the target adjustment page is arranged to the third display page, to obtain the at least one to-be-used display page.

In a possible implementation, the method further includes: if the quantity of rows occupied by the adjusted special icon on the target adjustment page does not exceed the quantity of rows of the desktop layout of the electronic device, directly arranging the adjusted icon on the target adjustment page to the third display page, to obtain the at least one to-be-used display page.

The method further includes: if the quantity of rows occupied by the adjusted special icon on the target adjustment page does not exceed the quantity of rows of the desktop layout of the electronic device, adjusting a small folder icon on the adjusted target adjustment page to a large folder icon, and arranging the adjusted icon on the target adjustment page to the third display page, to obtain the at least one to-be-used display page.

It should be noted that, when performing the single-page layout adjustment, to avoid that the to-be-used page cannot be obtained in the foregoing layout adjustment manner, the electronic device may directly adjust the position of the icon on the target adjustment page without changing the icon on the target adjustment page, to obtain the target display page.

Step S105: Display the at least one target display page.

Specifically, after determining the at least one target display page, the electronic device directly displays the at least one target display page.

In a possible implementation, the displaying the target display page includes:
displaying the target display page of each type in descending order of display priorities.

When the layout adjustment operation includes the classification-based layout adjustment operation, after classifying the icon on the target adjustment page according to the first icon classification sub-rule, to obtain the at least one type of icon, the electronic device determines the display priority of each type of icon. Therefore, after determining the at least one target display page, the electronic device may display the target display page of each type based on the display priority of each type of icon.

In a possible embodiment, it is assumed that after the user performs the single-page layout adjustment operation, the electronic device displays the determined target display page to the user, and the user may perform the single-page layout adjustment operation again. In this case, the icon arrangement method further includes:
in response to the single-page layout adjustment operation of the user, updating a next to-be-used display page of the current target display page as the target display page based on the display sequence in the to-be-used display page; and
displaying the updated target display page.

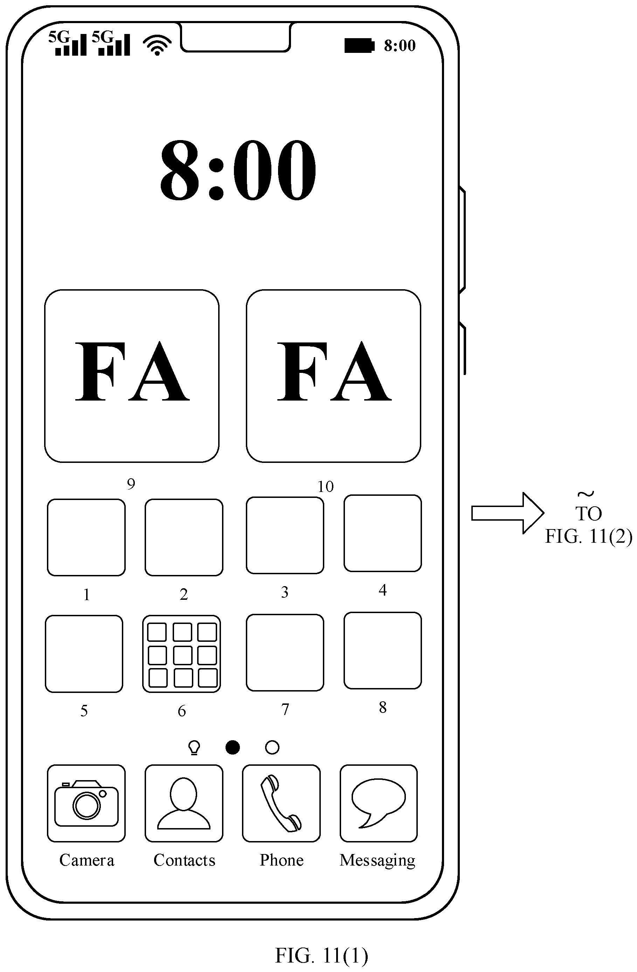

Specifically, it is assumed that the user is not satisfied with a result of the first single-page layout adjustment, and the user may tap the switch button 205 on the layout adjustment page 204 again. In response to the single-page layout adjustment operation of the user, the next to-be-used display page of the current target display page is updated as the target display page based on the display sequence in the to-be-used display page, and the updated target display page is displayed. Specific operation effect is shown in FIG. 11(1) to FIG. 11(3). In this way, different requirements of the user can be met, and user experience can be improved.

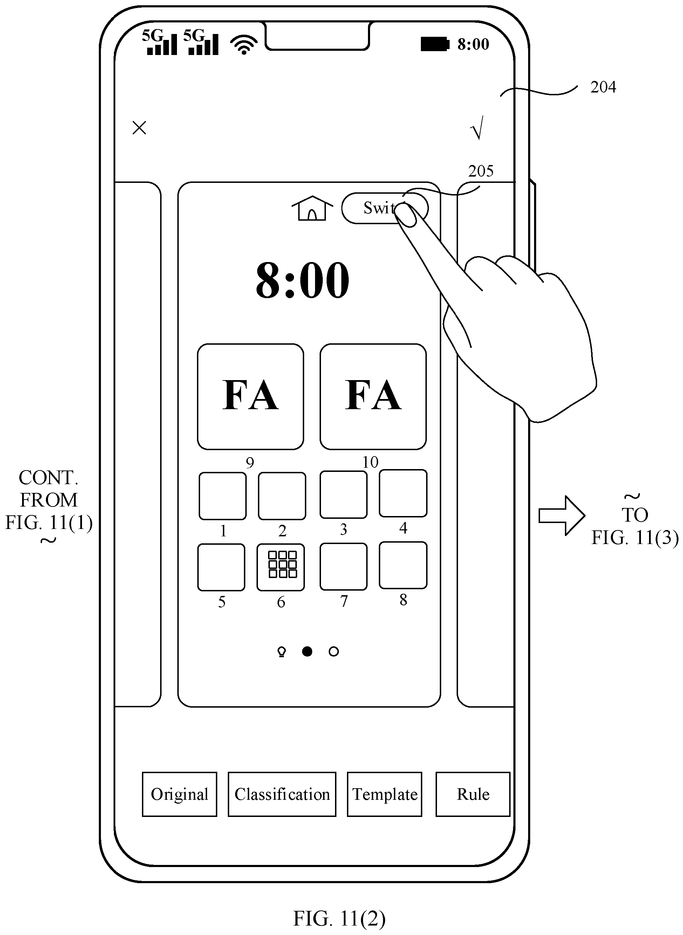

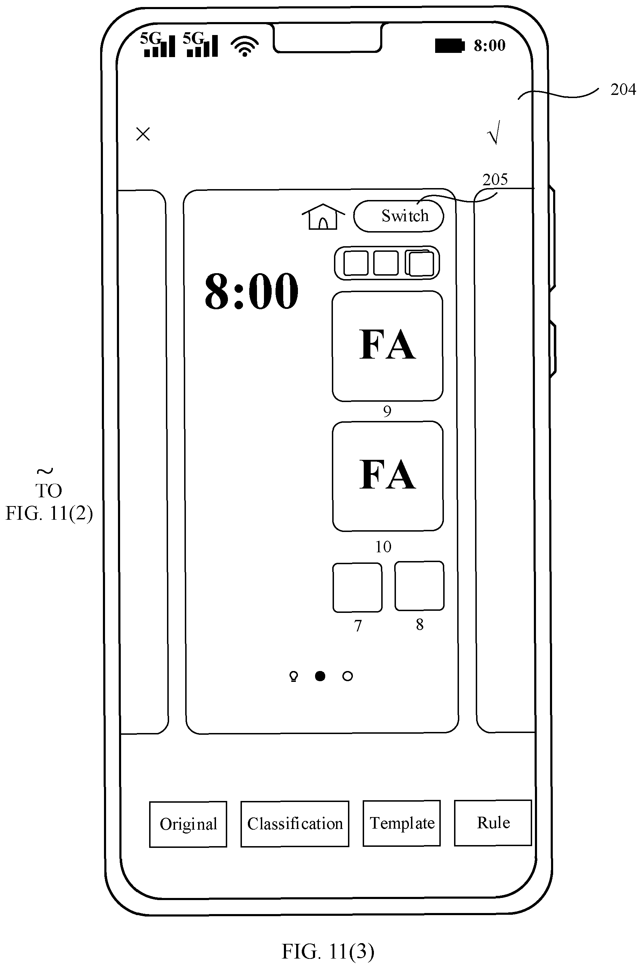

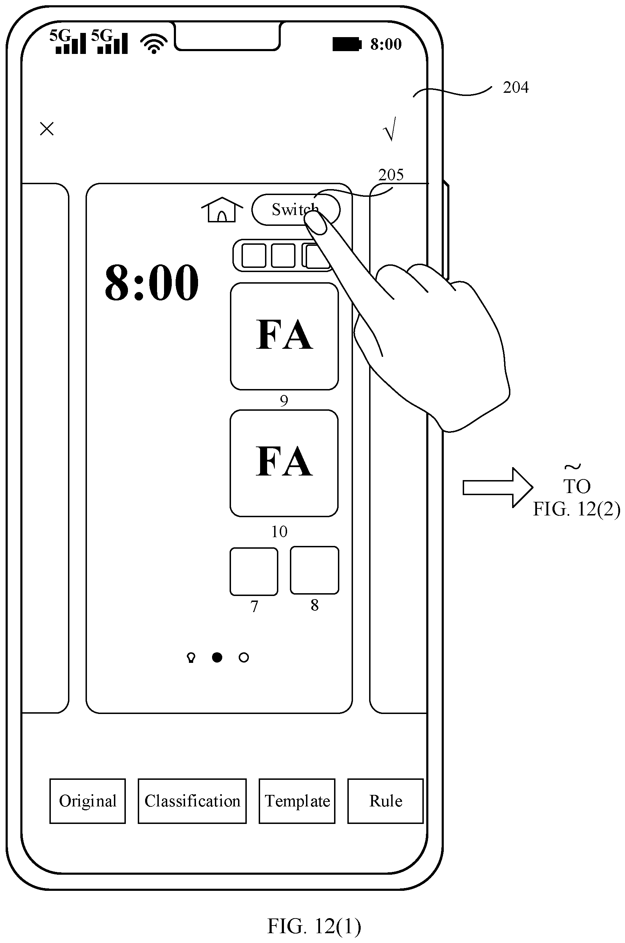

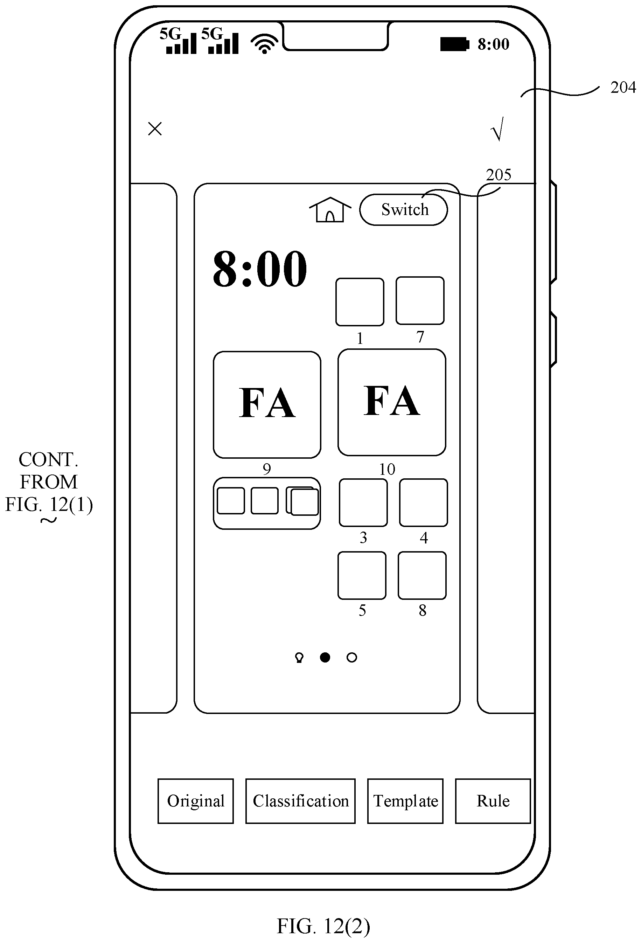

For example, the user performs the single-page layout adjustment operation and the color classification-based layout adjustment operation. It is assumed that the user desktop is shown in FIG. 11(1), and includes a weather clock widget, application icons 1 to 5, a small folder icon 6, an application icon 7, an application icon 8, a service card 9, and a service card 10. A desktop layout is 6×4. It is assumed that, as shown in FIG. 11(2), the user taps the switch button 205 on the layout adjustment page 204. In response to the single-page layout adjustment operation of the user, the electronic device obtains the icon weather clock widget, the application icons 1 to 8, the service card 9, and the service card 10 on the page, determines that a size of the icon weather clock widget may be modified, modifies the size of the weather clock widget from 2×4 to a size of 2×2, and performs the operation related to the single-page layout adjustment. Therefore, the electronic device determines at least one to-be-used display page. A to-be-used display page with a highest priority in the at least one to-be-used display page is determined as the target display page and displayed to the user. Details are shown in FIG. 11(3). As shown in FIG. 12(1) and FIG. 12(2), it is assumed that the user taps the switch button 205 again. In response to the single-page layout adjustment operation of the user, the electronic device updates the next to-be-used display page of the current target display page as the target display page, and displays the target display page to the user.

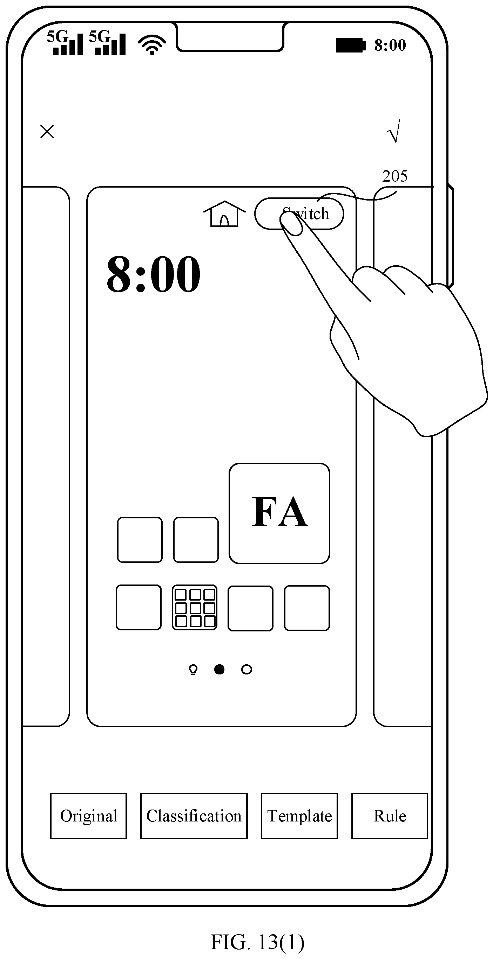

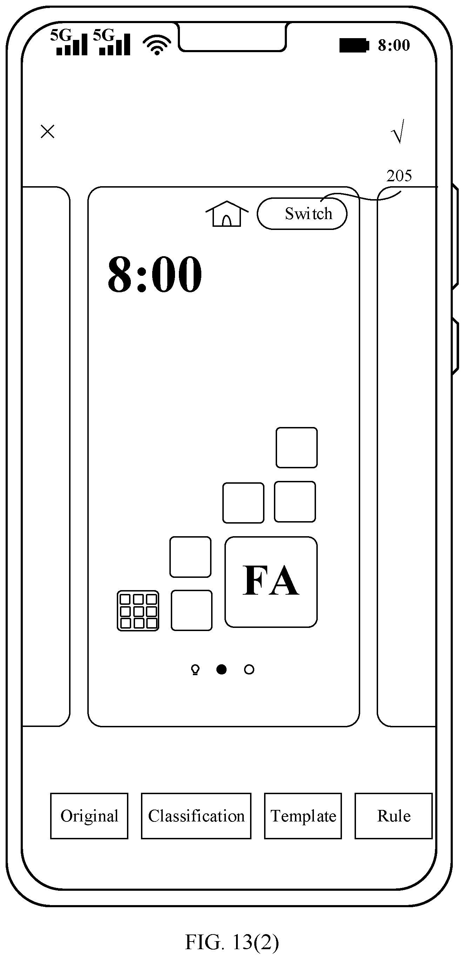

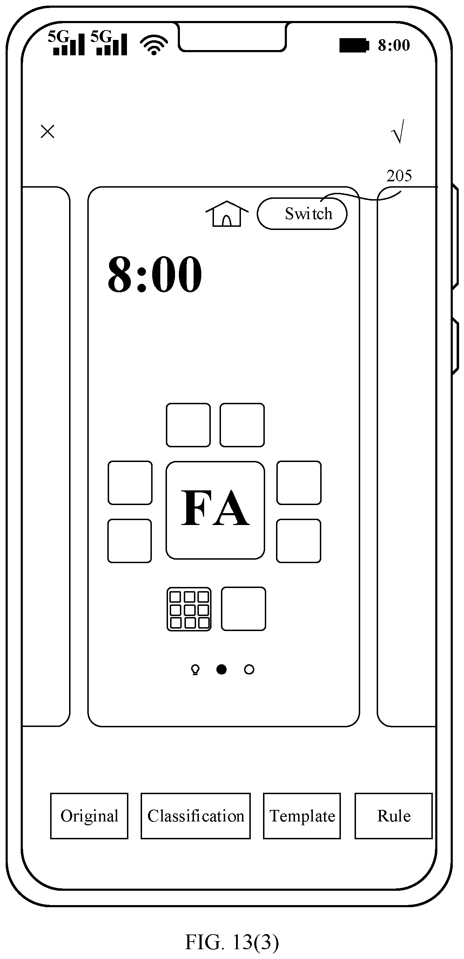

Alternatively, FIG. 13(1) shows a current page of the electronic device. In response to the single-page layout adjustment operation of the user, the electronic device may adjust a page layout according to a specific rule, and adjust and arrange an icon on the page according to a triangle arrangement rule or an annular arrangement rule. Details are shown in FIG. 13(2) and FIG. 13(3). In this way, according to the method in this embodiment of this application, the single-page layout adjustment may be performed on the target adjustment page selected by the user by adding a folder icon, adjusting a size of a folder icon, a service card, or a widget, or the like. In addition, a plurality of selections may be presented to the user, to meet different requirements of the user.

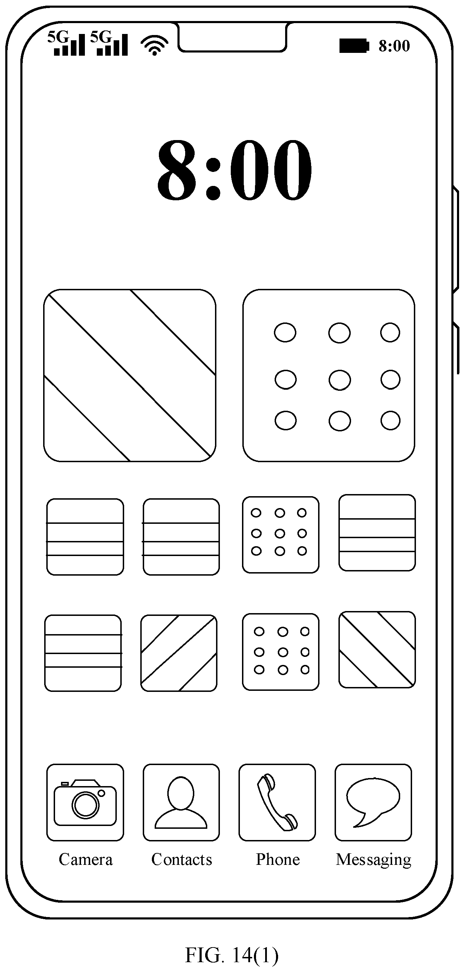

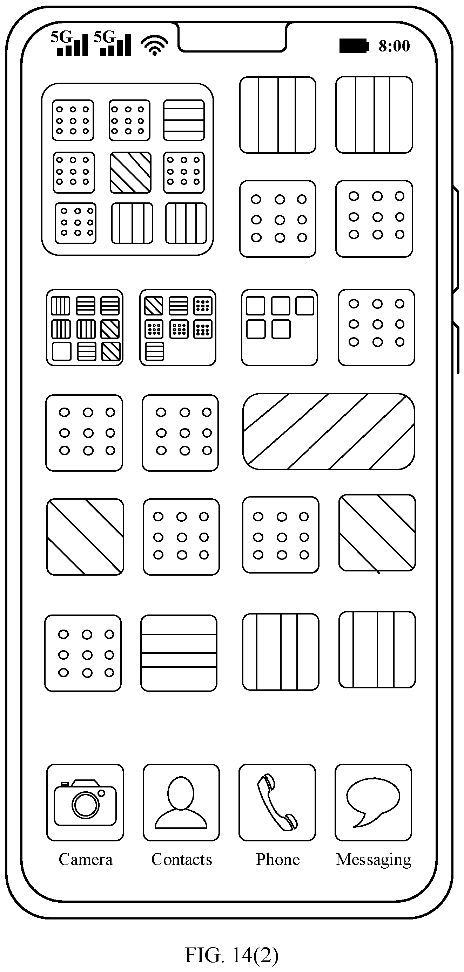

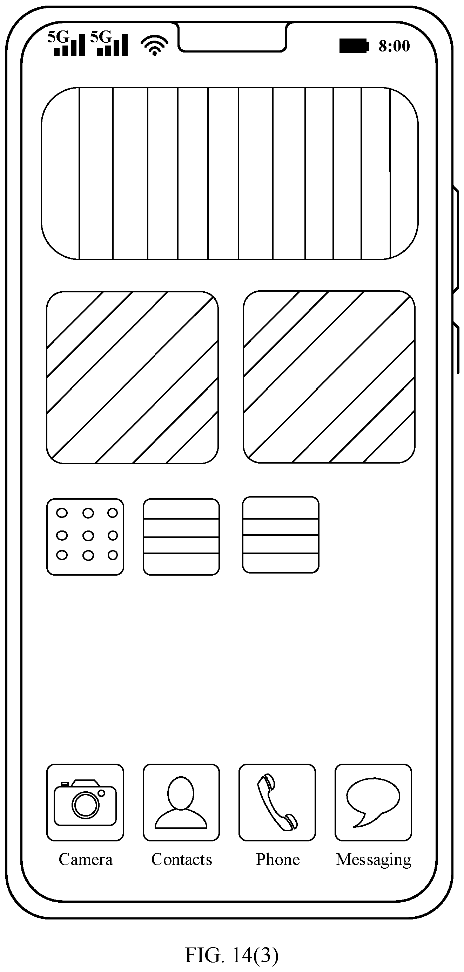

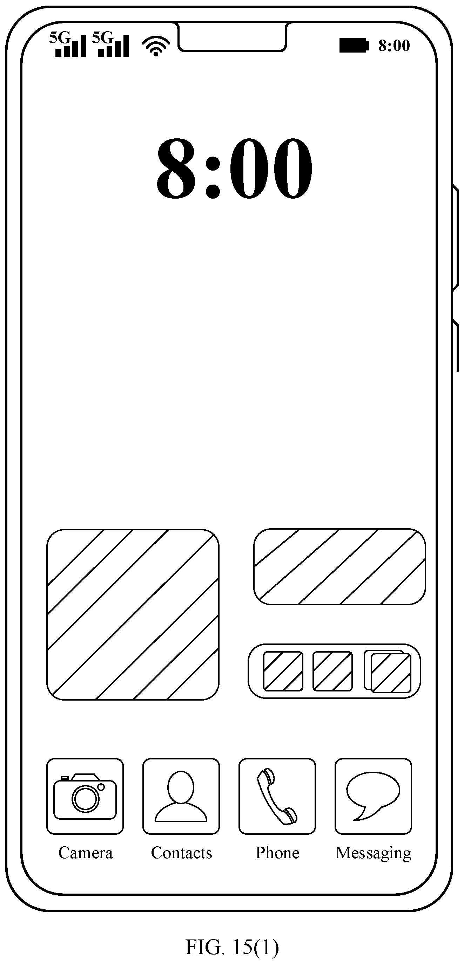

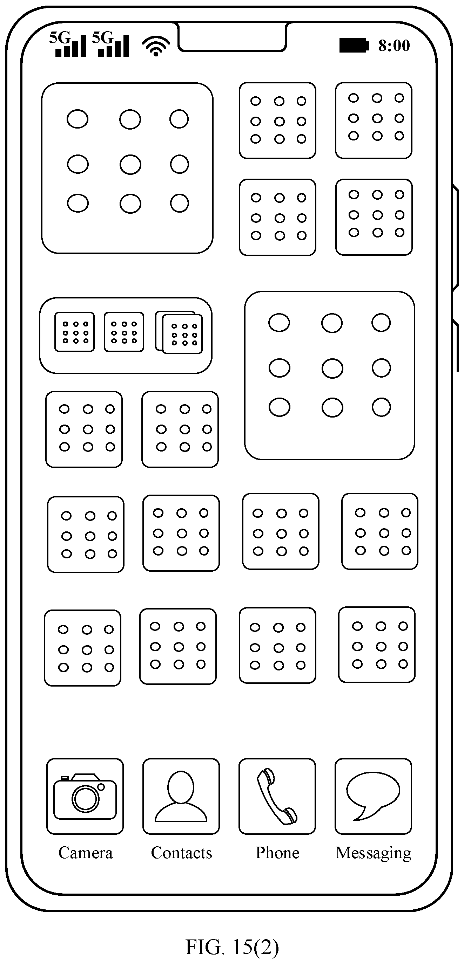

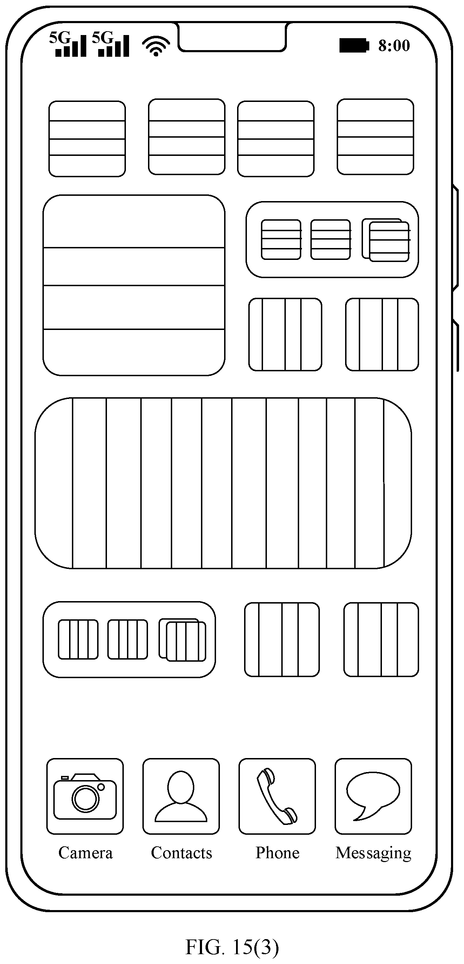

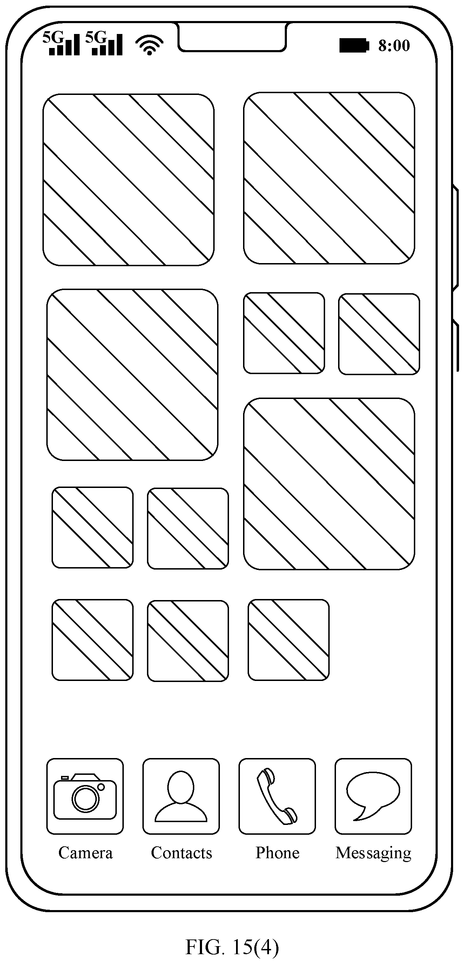

It is assumed that the user desktop is shown in FIG. 14(1) to FIG. 14(3), an icon marked by a horizontal line is a red icon, an icon marked by a vertical line is a yellow icon, an icon marked by a left oblique line is a white icon, an icon marked by a right oblique line is a green icon, and an icon marked by a circle is a blue icon. It is assumed that after the user performs the color classification-based layout adjustment operation, the electronic device arranges all icons on the user desktop based on the color classification-based layout adjustment operation, and then determines at least one target display page. As shown in FIG. 15(1) to FIG. 15(4), a page display manner of the green-type icon is the half-screen display manner, a green service card is added, and the icon is displayed on a 1^{st} page. A page display manner of the blue-type icon is the full-screen display manner, a blue service card is added, and the icon is displayed on a 2^{nd} page. A page display manner of the red-type icon is the half-screen display manner, and a red service card is added; and a page display manner of the yellow-type icon is the half-screen display manner, where half-screen combination is performed on the two types of icons. Because a priority of the red-type icon is higher than that of the yellow-type icon, the red-type icon is displayed in an upper half part of a 3^{rd} page. A page display manner of the white-type icon is the full-screen display manner, a white service card is added, and the icon is displayed on the last page. A specific process is not described again. In this way, all icons on the electronic device may be arranged based on different color types, an icon that is frequently used by the user is placed in front of the desktop, and the display page is beautified by adding a service card, a widget, or a folder icon.

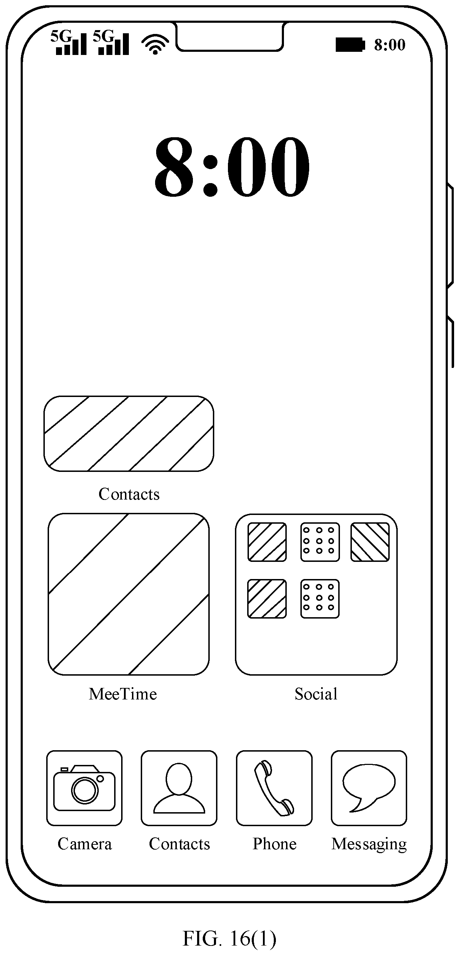

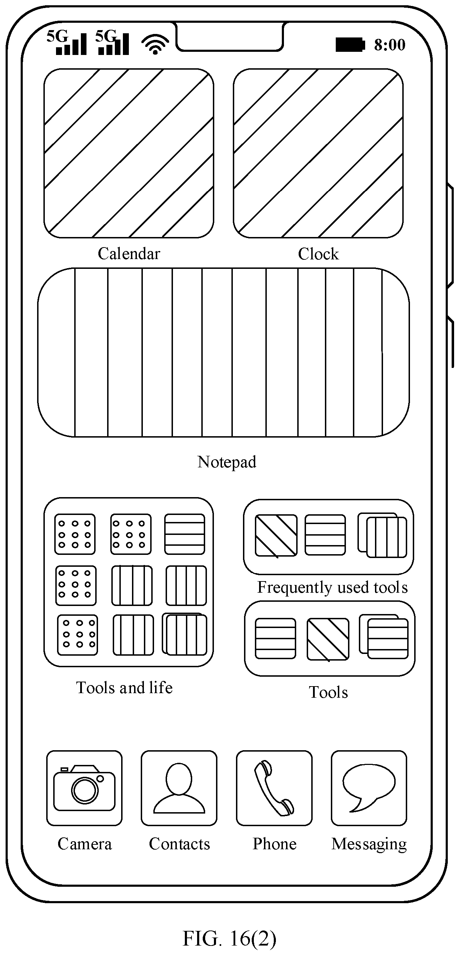

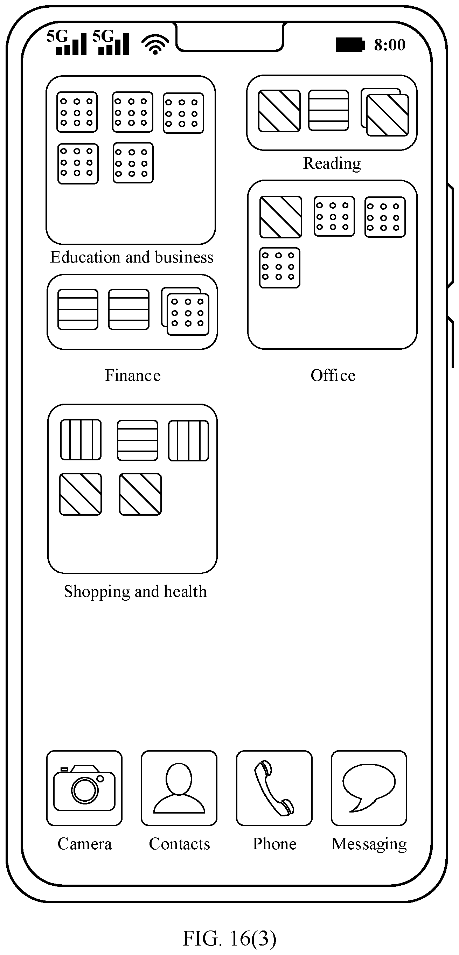

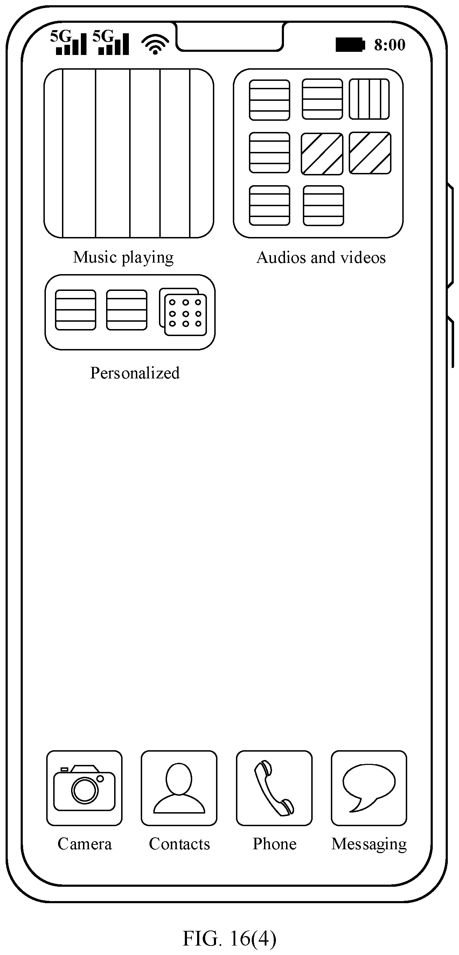

It is assumed that the user desktop is shown in FIG. 14(1) to FIG. 14(3). After the user performs the color classification-based layout adjustment operation, the electronic device arranges all icons on the user desktop based on the function classification-based layout adjustment operation, and then determines at least one target display page. As shown in FIG. 16(1) to FIG. 16(4), a page display manner of an icon whose first function category is the social news type is the half-screen display manner, a service card of contacts is added, and the icon is displayed on a 1^{st} page. A page display manner of an icon whose first function category is the life type is the full-screen display manner, and the icon is displayed on a 2^{nd} page. A page display manner of an icon whose first function category is the learning office type is the full-screen display manner, and the icon is displayed on a 3^{rd} page. A page display manner of an icon whose first function category is the entertainment type is the half-screen display manner, and a service card for playing music is added, and the icon is displayed on the 3^{rd} page. A specific process is not described again. In this way, all icons on the electronic device may be arranged based on different function categories, and icons of a same type are included into a folder icon, so that the user can more quickly determine a position of an icon of an application that the user wants to use. In addition, in the manner of adding a service card, not only icon arrangement efficiency is improved, but also the display page is more aesthetic.

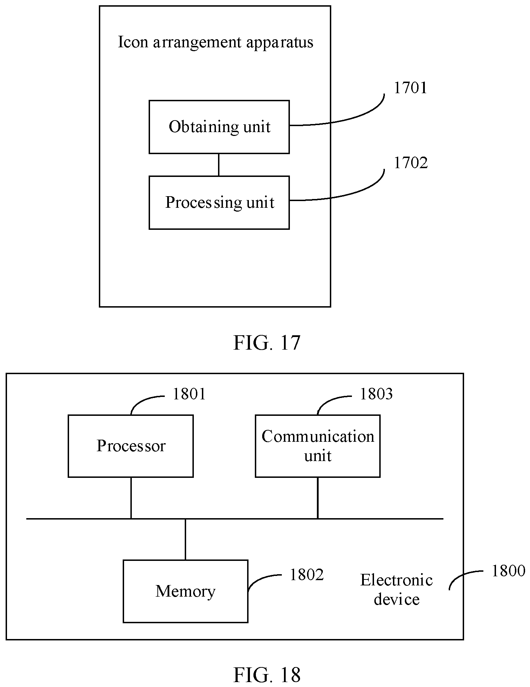

As shown in FIG. 17, an embodiment of this application provides an icon arrangement apparatus, including:
a processing unit 1701, configured to determine a target adjustment page and a target adjustment rule in response to a layout adjustment operation of a user; and
an obtaining unit 1702, configured to obtain an icon on the target adjustment page.

The processing unit 1701 is further configured to determine a desktop layout of an electronic device.

The processing unit 1701 is further configured to adjust an icon layout of the target adjustment page based on the desktop layout of the electronic device and the target adjustment rule, to obtain at least one target display page, where each of the at least one target display page includes a plurality of application icons and another icon, the another icon includes at least one of a folder icon, a service card, or a widget, and the folder icon includes at least two application icons.

The processing unit 1701 is further configured to display the at least one target display page.

In a possible implementation, the processing unit 1701 is specifically configured to: in response to the classification-based layout adjustment operation of the user, determine all display pages of the electronic device as target adjustment pages, and determine a classification-based layout adjustment rule as the target adjustment rule, where the classification-based layout adjustment rule includes a first icon classification sub-rule and a first display sub-rule;
classify the icon on the target adjustment page according to the first icon classification sub-rule, to obtain at least one type of icon;
determine, based on the desktop layout of the electronic device, each type of icon, and the first display sub-rule, a first display page corresponding to each type of icon, a page display manner of each type of icon on the first display page, and whether to add the another icon, where the page display manner includes a full-screen display manner or a half-screen display manner;
determine a display priority corresponding to each type of icon;
arrange, based on the page display manner of each type of icon on the first display page and whether to add the another icon, each type of icon to the first display page corresponding to each type of icon, to obtain a target display page; and
display the target display page of each type in descending order of display priorities.

In a possible implementation, the classification-based layout adjustment rule further includes a half-screen combination rule.

The processing unit 1701 is further configured to: determine, based on the page display manner of each type of icon on the first display page, whether there are at least two second display pages in the first display page corresponding to each type of icon, where a page display manner of the second display page is the half-screen display manner; and
if there are at least two second display pages, divide the second display pages into at least one combined page group in pairs based on display priorities of second display pages, and for each combined page group, combining, according to the half-screen combination rule, a second display page with a lower priority into a second display page with a higher priority in the combined page group.

In a possible implementation, the processing unit 1701 is specifically configured to: obtain a dominant hue value of each icon on the target adjustment page;
determine a color type corresponding to the dominant hue value of each icon based on the first icon classification sub-rule and the dominant hue value of each icon; and
determine, based on the color type corresponding to the dominant hue value of each icon, icons corresponding to a same color type as icons of one type, to obtain the at least one type of icon.

In a possible implementation, the processing unit 1701 is further configured to: determine, based on a size of each type of icon in the at least one type of icon, a quantity of grids occupied by each type of icon in the at least one type of icon;
determine, based on the quantity of grids occupied by each type of icon, whether there is an icon of a first type in the at least one type of icon, where the icon of the first type is a type of icon whose quantity of occupied grids is less than a first preset threshold; and
if there are icons of at least two first types, combine the icons of the at least two first types into icons of one type.

In a possible implementation, the processing unit 1701 is specifically configured to: determine a quantity of rows of the desktop layout of the electronic device and a quantity of grids of the desktop layout of the electronic device based on the desktop layout of the electronic device;
for each type of icon in the at least one type of icon, determine the quantity of occupied grids corresponding to the type of icon;
determine whether the type of icon includes a special icon, where the special icon includes the service card and the widget;
if the type of icon does not include the special icon, determine whether the quantity of occupied grids corresponding to the type of icon exceeds a second preset threshold;
if the quantity of occupied grids corresponding to the type of icon exceeds the second preset threshold, determine the first display page corresponding to the type, where the page display manner of the type of icon on the first display page is the full-screen display manner; and determine to add the folder icon and the service card or the widget;
if the quantity of occupied grids corresponding to the type of icon exceeds the first preset threshold and does not exceed the second preset threshold, determine the first display page corresponding to the type, where the page display manner of the type of icon on the first display page is the half-screen display manner; and determine to add the folder icon, the service card, or the widget;
if the type of icon includes the special icon, determine, based on the desktop layout of the electronic device and a size of the special icon in the type of icon, a quantity of rows occupied by the special icon in the type of icon;
determine whether the quantity of rows occupied by the special icon exceeds the quantity of rows of the desktop layout of the electronic device;
if the quantity of rows occupied by the special icon does not exceed the quantity of rows of the desktop layout of the electronic device, determine the first display page corresponding to the type of icon;
determine whether the quantity of grids occupied by the type of icon exceeds the quantity of grids of the desktop layout of the electronic device;
if the quantity of grids occupied by the type of icon exceeds the quantity of grids of the desktop layout of the electronic device, determine that the page display manner of the type of icon on the first display page is the full-screen display manner, and determine to add the folder icon;
if the quantity of grids occupied by the type of icon does not exceed the quantity of grids of the desktop layout of the electronic device and exceeds the second preset threshold, determine that the page display manner of the type of icon on the first display page is the full-screen display manner, and determine not to add the another icon;
if the quantity of grids occupied by the type of icon does not exceed the second preset threshold and exceeds the first preset threshold, determine the quantity of rows occupied by the special icon;
if the quantity of rows occupied by the special icon does not exceed a third preset threshold, determine that the page display manner of the type of icon on the first display page is the half-screen display manner, and determine not to add the another icon; and
if the quantity of rows occupied by the special icon exceeds the second preset threshold, determine that the page display manner of the type of icon on the first display page is the full-screen display manner, and determine not to add the another icon.

In a possible implementation, the processing unit 1701 is further configured to: if the quantity of rows occupied by the special icon exceeds the quantity of rows of the desktop layout of the electronic device, determine at least two first display pages corresponding to the type of icon, and an icon that is of the type and that needs to be displayed on each first display page; and
for each of the at least two first display pages, determine, based on the icon that is of the type and that needs to be displayed on the first display page, a page display manner, on the first display page, of the icon that is of the type and that needs to be displayed on the first display page and whether to add the another icon.

In a possible implementation, the processing unit 1701 is specifically configured to: for each type of icon in the at least one type of icon, determine, based on the page display manner of the type of icon on the first display page and whether to add the another icon, target display content on the first display page corresponding to the type of icon, where the target display content includes all or a part of the type of icon, or includes all or a part of the type of icon and another added icon;
determine display position information of the target display content based on the target display content and the first preset arrangement sub-rule; and
arrange, based on the target display content and the display position information of the target display content, the target display content to the first display page corresponding to the type of icon, to obtain the target display page corresponding to the type of icon.

In a possible implementation, the processing unit 1701 is specifically configured to: determine a quantity of rows of the desktop layout of the electronic device based on the desktop layout of the electronic device;
for each type of icon in the at least one type of icon, determine a second function category of an application icon in the type of icon;
determine, based on a second function category corresponding to each application icon in the type of icon, application icons corresponding to a same second function category in the type of icon as application icons of one second type, to obtain application icons of at least one second type;
determine, based on a quantity of application icons of the at least one second type, a quantity of folder icons to be added to the first display page corresponding to the type and a size of the to-be-added folder icon;
determine, based on the desktop layout of the electronic device and a size of a special icon in the type of icon, a quantity of rows occupied by the special icon in the type of icon, where the special icon includes the service card and the widget;
if the quantity of rows occupied by the special icon does not exceed the quantity of rows of the desktop layout of the electronic device, determine the first display page corresponding to the type of icon;
determine, based on the quantity of folder icons to be added to the first display page and the size of the to-be-added folder icon, a quantity of rows occupied by the special icon and the to-be-added folder icon on the first display page;
if the quantity of rows occupied by the special icon and the to-be-added folder icon on the first display page exceeds the quantity of rows of the desktop layout of the electronic device, determine that the page display manner of the type of icon on the first display page is the full-screen display manner, and determine to reduce the size of the to-be-added folder icon;
if the quantity of rows occupied by the special icon and the to-be-added folder icon on the first display page exceeds a fourth preset threshold and does not exceed the quantity of rows of the desktop layout of the electronic device, determine that the page display manner of the type of icon on the first display page is the full-screen display manner, where the fourth preset threshold is less than the quantity of rows of the desktop layout of the electronic device; and
if the quantity of rows occupied by the special icon and the to-be-added folder icon on the first display page does not exceed the fourth preset threshold, determine that the page display manner of the type of icon on the first display page is the half-screen display manner.

In a possible implementation, the processing unit 1701 is further configured to: if the quantity of rows occupied by the special icon exceeds the quantity of rows of the desktop layout of the electronic device, determine at least two first display pages corresponding to the type of icon, an icon that is of the type and that needs to be displayed on each first display page, and a folder icon that needs to be added; and
for each of the at least two first display pages, determine, based on the icon that is of the type and that needs to be displayed on the first display page and the folder icon that needs to be added, a page display manner, on the first display page, of the icon that is of the type and that needs to be displayed on the first display page and the folder icon that needs to be added. In a possible implementation, the processing unit 1701 is further configured to: determine a quantity of application icons of each second type in the application icons of the at least one second type;
determine, based on the quantity of application icons of each second type, whether there are application icons of at least two third types in the application icons of the at least one second type, where a quantity of application icons of the third types is less than a preset icon quantity threshold; and
if there are application icons of at least two third types, combine the application icons of the at least two third types in pairs into application icons of one second type.

In a possible implementation, the processing unit 1701 is further configured to: if the page display manner of the type of icon on the first display page is the half-screen display manner, obtain an addable icon, where the addable icon includes a preset addable service card and widget;
determine a target to-be-added icon from the addable icon; and
determine the target to-be-added icon as another icon to be added to the first display page corresponding to the type, and update the page display manner of the type of icon on the first display page to the full-screen display manner.

In a possible implementation, the processing unit 1701 is specifically configured to: for each type of icon, determine, based on the page display manner of each type of icon on the first display page and whether to add the another icon, target display content on the first display page corresponding to the type, where the target display content includes all or a part of the type of icon and another added icon, and the another added icon includes an added folder icon, or an added folder icon and the target to-be-added icon;
determine display position information of the target display content based on the target display content and the second preset arrangement sub-rule; and
arrange, based on the display position information of the target display content, the target display content to the first display page corresponding to the type, to obtain the target display page corresponding to the type of icon.

In a possible implementation, the processing unit 1701 is specifically configured to: in response to the single-page layout adjustment operation of the user, determine, as the target adjustment page, a display page that is of the electronic device and that is selected by the user by using the single-page layout adjustment operation, and determine a single-page layout adjustment rule as the target adjustment rule, where the single-page layout adjustment rule includes a second icon classification sub-rule and a second display sub-rule.

The processing unit 1701 is specifically configured to: obtain a current icon layout of the target adjustment page; and
determine a target display page based on the icon on the target adjustment page, the current icon layout of the target adjustment page, the second icon classification sub-rule, the second display sub-rule, and the desktop layout of the electronic device, where an icon layout of the target display page is different from the current icon layout of the target adjustment page.

In a possible implementation, the processing unit 1701 is specifically configured to: determine at least one to-be-used display page based on the icon on the target adjustment page, the current icon layout of the target adjustment page, the second icon classification sub-rule, the second display sub-rule, and the desktop layout of the electronic device, where an icon layout of the at least one to-be-used display page is different from the current icon layout of the target adjustment page;
determine a priority of the at least one to-be-used display page based on the current icon layout of the target adjustment page and the icon layout of the at least one to-be-used display page; and
determine a to-be-used display page with a highest priority in the at least one to-be-used display page as the target display page.

In a possible implementation, the processing unit 1701 is specifically configured to: determine a difference between an icon layout of each of the at least one to-be-used display page and the current icon layout of the target adjustment page based on the current icon layout of the target adjustment page and the icon layout of the at least one to-be-used display page; and
determine the priority of the at least one to-be-used display page based on the difference between the icon layout of each of the at least one to-be-used display page and the current icon layout of the target adjustment page, where the priority of the at least one to-be-used display page is in direct proportion to the difference between the icon layout of each of the at least one to-be-used display page and the current icon layout of the target adjustment page.

In a possible implementation, the processing unit 1701 is specifically configured to: determine a third display page based on the desktop layout of the electronic device;
determine whether there is an adjustable icon in the icon on the target adjustment page, where the adjustable icon includes a service card or a widget whose size is adjustable;
if it is determined that there is no adjustable icon, obtain type information of an application icon in the icon on the target adjustment page; and perform, according to the second icon classification sub-rule, folder classification on at least two application icons whose type information is the same, to determine at least one to-be-added folder icon;
determine whether there is a folder icon whose size is adjustable in the icon on the target adjustment page;
if there is a folder icon whose size is adjustable, adjust the size of the folder icon on the target adjustment page, to obtain an adjusted folder icon; and
arrange the at least one to-be-added folder icon and the icon on the target adjustment page to the third display page according to the third preset arrangement sub-rule, to obtain the at least one to-be-used display page.

In a possible implementation, the processing unit 1701 is further configured to: if it is determined that there is an adjustable icon in the icon on the target adjustment page, adjust a size of the adjustable icon on the target adjustment page, to obtain an adjusted icon on the target adjustment page;
determine a quantity of rows occupied by the adjusted icon on the target adjustment page;
if the quantity of rows occupied by the adjusted icon on the target adjustment page does not exceed a quantity of rows of the desktop layout of the electronic device, determine, based on the desktop layout of the electronic device and the adjusted icon on the target adjustment page, whether to add a folder; and
arrange, based on the third preset arrangement sub-rule and a determined result of whether to add the folder, the adjusted icon on the target adjustment page to the third display page, to obtain the at least one to-be-used display page.

In a possible implementation, the processing unit 1701 is specifically configured to: determine a display sequence in the to-be-used display page in descending order of priorities based on the priority of the to-be-used display page; and
determine a 1^{st} to-be-used display page as the target display page based on the display sequence in the to-be-used display page.

The processing unit 1701 is further configured to: in response to the single-page layout adjustment operation of the user, update a next to-be-used display page of the current target display page as the target display page based on the display sequence in the to-be-used display page; and
display the updated target display page.

In a possible implementation, the processing unit 1701 is specifically configured to: obtain a preset layout template in response to the template-based layout adjustment operation of the user, and display the preset layout template on the electronic device;
in response to a template selection operation of the user, determine all display pages of the electronic device as target adjustment pages, and determine a to-be-used template; and
determine a template-based layout adjustment rule corresponding to the to-be-used template as the target adjustment rule.

In correspondence to the foregoing embodiments, this application further provides an electronic device. FIG. 18 is a diagram of a structure of an electronic device according to an embodiment of the present invention. An electronic device 1800 may include a processor 1801, a memory 1802, and a communication unit 1803. These components communicate through one or more buses. A person skilled in the art may understand that a structure of a server shown in the figure does not constitute a limitation on embodiments of the present invention. The structure may be a bus structure, or may be a star structure, or may further include more or fewer components than those shown in the figure, or combine some components, or have different component arrangements.

The communication unit 1803 is configured to: establish a communication channel, so that the electronic device can communicate with another device; and receive user data sent by the another device or send user data to the another device.

The processor 1801 is a control center of the electronic device, connects to various parts of the entire electronic device through various interfaces and lines, and performs various functions of the electronic device and/or data processing by running or executing a software program and/or a module stored in the memory 1802 and invoking data stored in the memory. The processor may include an integrated circuit (Integrated Circuit, IC), for example, may include a single packaged IC, or may include a plurality of connected packaged ICs with a same function or different functions. For example, the processor 1801 may include only a central processing unit (central processing unit, CPU). In this implementation of the present invention, the CPU may be a single computing core, or may include a plurality of computing cores.

The memory 1802 is configured to store execution instructions of the processor 1801. The memory 1802 may be implemented by any type of a volatile or non-volatile storage device or a combination thereof, for example, a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

When the execution instructions in the memory 1802 are executed by the processor 1801, the electronic device 1800 is enabled to perform some or all steps in the embodiment shown in FIG. 1.

In a specific implementation, the present invention further provides a computer storage medium. The computer storage medium may store a program, and when the program is executed, some or all of the steps of embodiments of the icon arrangement method provided in the present invention may be performed. The storage medium may be a magnetic disk, an optical disc, a read-only memory (read-only memory, ROM), a random access memory (random access memory, RAM), or the like.

A person skilled in the art may clearly understand that, the technologies in embodiments of the present invention may be implemented by software in addition to a necessary general hardware platform. Based on such an understanding, the technical solutions in embodiments of the present invention essentially or the part contributing to the conventional technology may be implemented in a form of a software product. The computer software product may be stored in a storage medium, such as a ROM/RAM, a magnetic disk, or an optical disc, and includes several instructions for indicating a computer device (which may be a personal computer, a server, or a network device) to perform the methods described in embodiments or some parts of embodiments of the present invention.

For same or similar parts in embodiments of this specification, refer to each other. Especially, apparatus and terminal embodiments are basically similar to method embodiments, and therefore are described briefly. For related parts, refer to partial descriptions in the method embodiments.

## Claims

1. An icon arrangement method, applied to an electronic device, wherein the method comprises:
determining a target adjustment page and a target adjustment rule in response to a layout adjustment operation of a user;
obtaining an icon on the target adjustment page;
determining a desktop layout of the electronic device;
adjusting an icon layout of the target adjustment page based on the desktop layout of the electronic device and the target adjustment rule, to obtain at least one target display page, wherein each of the at least one target display page comprises a plurality of application icons and another icon, the another icon comprises at least one of a folder icon, a service card, or a widget, and the folder icon comprises at least two application icons; and
displaying the at least one target display page.

2. The method according to claim 1, wherein the layout adjustment operation comprises a classification-based layout adjustment operation;
the determining a target adjustment page and a target adjustment rule in response to a layout adjustment operation of a user comprises:
in response to the classification-based layout adjustment operation of the user, determining all display pages of the electronic device as target adjustment pages, and determining a classification-based layout adjustment rule as the target adjustment rule, wherein the classification-based layout adjustment rule comprises a first icon classification sub-rule and a first display sub-rule;
the adjusting an icon layout of the target adjustment page based on the desktop layout of the electronic device and the target adjustment rule, to obtain at least one target display page comprises:
classifying the icon on the target adjustment page according to the first icon classification sub-rule, to obtain at least one type of icon;
determining, based on the desktop layout of the electronic device, each type of icon, and the first display sub-rule, a first display page corresponding to each type of icon, a page display manner of each type of icon on the first display page, and whether to add the another icon, wherein the page display manner comprises a full-screen display manner or a half-screen display manner;
determining a display priority corresponding to each type of icon; and
arranging, based on the page display manner of each type of icon on the first display page and whether to add the another icon, each type of icon to the first display page corresponding to each type of icon, to obtain a target display page; and
the displaying the target display page comprises:
displaying the target display page of each type in descending order of display priorities.

3. The method according to claim 2, wherein the classification-based layout adjustment rule further comprises a half-screen combination rule;
before the arranging, based on the page display manner of each type of icon on the first display page and whether to add the another icon, each type of icon to the first display page corresponding to each type of icon, to obtain a target display page, the method further comprises:
determining, based on the page display manner of each type of icon on the first display page, whether there are at least two second display pages in the first display page corresponding to each type of icon, wherein a page display manner of the second display page is the half-screen display manner; and
if there are at least two second display pages, dividing the second display pages into at least one combined page group in pairs according to the half-screen combination rule, and for each combined page group, combining, based on display priorities of the second display pages, a second display page with a lower priority into a second display page with a higher priority in the combined page group.

4. The method according to claim 2, wherein the classification-based layout adjustment operation comprises a color classification-based layout adjustment operation, and the first icon classification sub-rule comprises a dominant hue value range corresponding to each color type; and
the classifying the icon on the target adjustment page according to the first icon classification sub-rule, to obtain at least one type of icon comprises:
obtaining a dominant hue value of each icon on the target adjustment page;
determining a color type corresponding to the dominant hue value of each icon based on the first icon classification sub-rule and the dominant hue value of each icon; and
determining, based on the color type corresponding to the dominant hue value of each icon, icons corresponding to a same color type as icons of one type, to obtain the at least one type of icon.

5. The method according to claim 4, further comprising:
determining, based on a size of each type of icon in the at least one type of icon, a quantity of grids occupied by each type of icon in the at least one type of icon;
determining, based on the quantity of grids occupied by each type of icon, whether there is an icon of a first type in the at least one type of icon, wherein the icon of the first type is a type of icon whose quantity of occupied grids is less than a first preset threshold; and
if there are icons of at least two first types, combining the icons of the at least two first types into icons of one type.

6. The method according to claim 5, wherein the icon on the target adjustment page comprises at least one of an application icon, a service card, and a widget; and
the determining, based on the desktop layout of the electronic device, each type of icon, and the first display sub-rule, a first display page corresponding to each type of icon, a page display manner of each type of icon on the first display page, and whether to add the another icon comprises:
determining a quantity of rows of the desktop layout of the electronic device and a quantity of grids of the desktop layout of the electronic device based on the desktop layout of the electronic device;
for each type of icon in the at least one type of icon, determining the quantity of occupied grids corresponding to the type of icon;
determining whether the type of icon comprises a special icon, wherein the special icon comprises the service card and the widget;
if the type of icon does not comprise the special icon, determining whether the quantity of occupied grids corresponding to the type of icon exceeds a second preset threshold, wherein the second preset threshold is greater than the first preset threshold;
if the quantity of occupied grids corresponding to the type of icon exceeds the second preset threshold, determining the first display page corresponding to the type, wherein the page display manner of the type of icon on the first display page is the full-screen display manner; and determining to add the folder icon and the service card or the widget;
if the quantity of occupied grids corresponding to the type of icon exceeds the first preset threshold and does not exceed the second preset threshold, determining the first display page corresponding to the type, wherein the page display manner of the type of icon on the first display page is the half-screen display manner; and determining to add the folder icon, the service card, or the widget; and if the type of icon comprises the special icon, determining, based on the desktop layout of the electronic device and a size of the special icon in the type of icon, a quantity of rows occupied by the special icon in the type of icon;
determining whether the quantity of rows occupied by the special icon exceeds the quantity of rows of the desktop layout of the electronic device;
if the quantity of rows occupied by the special icon does not exceed the quantity of rows of the desktop layout of the electronic device, determining the first display page corresponding to the type of icon;
determining whether the quantity of grids occupied by the type of icon exceeds the quantity of grids of the desktop layout of the electronic device;
if the quantity of grids occupied by the type of icon exceeds the quantity of grids of the desktop layout of the electronic device, determining that the page display manner of the type of icon on the first display page is the full-screen display manner, and determining to add the folder icon;
if the quantity of grids occupied by the type of icon does not exceed the quantity of grids of the desktop layout of the electronic device and exceeds the second preset threshold, determining that the page display manner of the type of icon on the first display page is the full-screen display manner, and determining not to add the another icon;
if the quantity of grids occupied by the type of icon does not exceed the second preset threshold and exceeds the first preset threshold, determining the quantity of rows occupied by the special icon;
if the quantity of rows occupied by the special icon does not exceed a third preset threshold, determining that the page display manner of the type of icon on the first display page is the half-screen display manner, and determining not to add the another icon; and
if the quantity of rows occupied by the special icon exceeds the second preset threshold, determining that the page display manner of the type of icon on the first display page is the full-screen display manner, and determining not to add the another icon.

7. The method according to claim 6, further comprising:
if the quantity of rows occupied by the special icon exceeds the quantity of rows of the desktop layout of the electronic device, determining at least two first display pages corresponding to the type of icon, and an icon that is of the type and that needs to be displayed on each first display page; and
for each of the at least two first display pages, determining, based on the icon that is of the type and that needs to be displayed on the first display page, a page display manner, on the first display page, of the icon that is of the type and that needs to be displayed on the first display page and whether to add the another icon.

8. The method according to claim 2, wherein the classification-based layout adjustment rule further comprises a first preset arrangement sub-rule; and
the arranging, based on the page display manner of each type of icon on the first display page and whether to add the another icon, each type of icon to the first display page corresponding to each type of icon, to obtain a target display page comprises:
for each type of icon in the at least one type of icon, determining, based on the page display manner of the type of icon on the first display page and whether to add the another icon, target display content on the first display page corresponding to the type of icon, wherein the target display content comprises all or a part of the type of icon, or comprises all or a part of the type of icon and another added icon;
determining display position information of the target display content based on the target display content and the first preset arrangement sub-rule; and
arranging, based on the target display content and the display position information of the target display content, the target display content to the first display page corresponding to the type of icon, to obtain the target display page corresponding to the type of icon.

9. The method according to claim 2, wherein the classification-based layout adjustment operation comprises a function classification-based layout adjustment operation, the first icon classification sub-rule comprises at least two first function categories, each of the at least two first function categories comprises at least two second function categories, and each of the at least two second function categories corresponds to at least one application icon and/or other icon; and
the classifying the icon on the target adjustment page according to the first icon classification sub-rule, to obtain at least one type of icon comprises:
obtaining a first function category corresponding to the icon on the target adjustment page; and
determining, based on the first function category corresponding to the icon on the target adjustment page, icons corresponding to a same first function category as icons of one type, to obtain the at least one type of icon.

10. The method according to claim 9, wherein the icon on the target adjustment page comprises one or more of an application icon, a service card, and a widget; and
the determining, based on the desktop layout of the electronic device, each type of icon, and the first display sub-rule, a first display page corresponding to each type of icon, a page display manner of each type of icon on the first display page, and whether to add the another icon comprises:
determining a quantity of rows of the desktop layout of the electronic device based on the desktop layout of the electronic device;
for each type of icon in the at least one type of icon, determining a second function category of an application icon in the type of icon;
determining, based on a second function category corresponding to each application icon in the type of icon, application icons corresponding to a same second function category in the type of icon as application icons of one second type, to obtain application icons of at least one second type;
determining, based on a quantity of application icons of the at least one second type, a quantity of folder icons to be added to the first display page corresponding to the type and a size of the to-be-added folder icon;
determining, based on the desktop layout of the electronic device and a size of a special icon in the type of icon, a quantity of rows occupied by the special icon in the type of icon, wherein the special icon comprises the service card and the widget;
if the quantity of rows occupied by the special icon does not exceed the quantity of rows of the desktop layout of the electronic device, determining the first display page corresponding to the type of icon;
determining, based on the quantity of folder icons to be added to the first display page and the size of the to-be-added folder icon, a quantity of rows occupied by the special icon and the to-be-added folder icon on the first display page;
if the quantity of rows occupied by the special icon and the to-be-added folder icon on the first display page exceeds the quantity of rows of the desktop layout of the electronic device, determining that the page display manner of the type of icon on the first display page is the full-screen display manner, and determining to reduce the size of the to-be-added folder icon;
if the quantity of rows occupied by the special icon and the to-be-added folder icon on the first display page exceeds a fourth preset threshold and does not exceed the quantity of rows of the desktop layout of the electronic device, determining that the page display manner of the type of icon on the first display page is the full-screen display manner, wherein the fourth preset threshold is less than the quantity of rows of the desktop layout of the electronic device; and
if the quantity of rows occupied by the special icon and the to-be-added folder icon on the first display page does not exceed the fourth preset threshold, determining that the page display manner of the type of icon on the first display page is the half-screen display manner.

11. The method according to claim 10, further comprising:
if the quantity of rows occupied by the special icon exceeds the quantity of rows of the desktop layout of the electronic device, determining at least two first display pages corresponding to the type of icon, an icon that is of the type and that needs to be displayed on each first display page, and a folder icon that needs to be added; and
for each of the at least two first display pages, determining, based on the icon that is of the type and that needs to be displayed on the first display page and the folder icon that needs to be added, a page display manner, on the first display page, of the icon that is of the type and that needs to be displayed on the first display page and the folder icon that needs to be added.

12. The method according to claim 10, wherein before the determining, based on a quantity of application icons of the at least one second type, a quantity of folder icons to be added to the first display page and a size of the to-be-added folder icon, the method comprises:
determining a quantity of application icons of each second type in the application icons of the at least one second type;
determining, based on the quantity of application icons of each second type, whether there are application icons of at least two third types in the application icons of the at least one second type, wherein a quantity of application icons of the third types is less than a preset icon quantity threshold; and
if there are application icons of at least two third types, combining the application icons of the at least two third types in pairs into application icons of one second type.

13. The method according to claim 11, further comprising:
if the page display manner of the type of icon on the first display page is the half-screen display manner, obtaining an addable icon, wherein the addable icon comprises a preset addable service card and widget;
determining a target to-be-added icon from the addable icon; and
determining the target to-be-added icon as another icon to be added to the first display page corresponding to the type, and updating the page display manner of the type of icon on the first display page to the full-screen display manner.

14. The method according to claim 13, wherein the classification-based layout adjustment rule further comprises a second preset arrangement sub-rule; and
the arranging, based on the page display manner of each type of icon on the first display page and whether to add the another icon, each type of icon to the first display page corresponding to each type of icon, to obtain a target display page comprises:
for each type of icon, determining, based on the page display manner of each type of icon on the first display page and whether to add the another icon, target display content on the first display page corresponding to the type, wherein the target display content comprises all or a part of the type of icon and another added icon, and the another added icon comprises an added folder icon, or an added folder icon and the target to-be-added icon;
determining display position information of the target display content based on the target display content and the second preset arrangement sub-rule; and
arranging, based on the display position information of the target display content, the target display content to the first display page corresponding to the type, to obtain the target display page corresponding to the type of icon.

15. The method according to claim 1, wherein the layout adjustment operation comprises a single-page layout adjustment operation;
the determining a target adjustment page and a target adjustment rule in response to a layout adjustment operation of a user comprises:
in response to the single-page layout adjustment operation of the user, determining, as the target adjustment page, a display page that is of the electronic device and that is selected by the user by using the single-page layout adjustment operation, and determining a single-page layout adjustment rule as the target adjustment rule, wherein the single-page layout adjustment rule comprises a second icon classification sub-rule and a second display sub-rule; and
the adjusting an icon layout of the target adjustment page based on the desktop layout of the electronic device and the target adjustment rule, to obtain at least one target display page comprises:
obtaining a current icon layout of the target adjustment page; and
adjusting the icon layout of the target adjustment page based on the icon on the target adjustment page, the current icon layout of the target adjustment page, the second icon classification sub-rule, the second display sub-rule, and the desktop layout of the electronic device, to obtain a target display page, wherein an icon layout of the target display page is different from the current icon layout of the target adjustment page.

16. The method according to claim 15, wherein the determining a target display page based on the icon on the target adjustment page, the current icon layout of the target adjustment page, the second icon classification sub-rule, the second display sub-rule, and the desktop layout of the electronic device comprises:
adjusting the icon layout of the target adjustment page based on the icon on the target adjustment page, the current icon layout of the target adjustment page, the second icon classification sub-rule, the second display sub-rule, and the desktop layout of the electronic device, to obtain at least one to-be-used display page, wherein an icon layout of the at least one to-be-used display page is different from the current icon layout of the target adjustment page;
determining a priority of the at least one to-be-used display page based on the current icon layout of the target adjustment page and the icon layout of the at least one to-be-used display page; and
determining a to-be-used display page with a highest priority in the at least one to-be-used display page as the target display page.

17. The method according to claim 16, wherein the determining a priority of the at least one to-be-used display page based on the current icon layout of the target adjustment page and the icon layout of the at least one to-be-used display page comprises:
determining a difference between an icon layout of each of the at least one to-be-used display page and the current icon layout of the target adjustment page based on the current icon layout of the target adjustment page and the icon layout of the at least one to-be-used display page; and
determining the priority of the at least one to-be-used display page based on the difference between the icon layout of each of the at least one to-be-used display page and the current icon layout of the target adjustment page, wherein the priority of the at least one to-be-used display page is in direct proportion to the difference between the icon layout of each of the at least one to-be-used display page and the current icon layout of the target adjustment page.

18. The method according to claim 16, wherein the single-page layout adjustment rule further comprises a third preset arrangement sub-rule; and
the determining at least one to-be-used display page based on the icon on the target adjustment page, the current icon layout of the target adjustment page, the second icon classification sub-rule, the second display sub-rule, and the desktop layout of the electronic device comprises:
determining a third display page based on the desktop layout of the electronic device;
determining whether there is an adjustable icon in the icon on the target adjustment page, wherein the adjustable icon comprises a service card or a widget whose size is adjustable;
if it is determined that there is no adjustable icon, obtaining type information of an application icon in the icon on the target adjustment page; and performing, according to the second icon classification sub-rule, folder classification on at least two application icons whose type information is the same, to determine at least one to-be-added folder icon;
determining whether there is a folder icon whose size is adjustable in the icon on the target adjustment page;
if there is a folder icon whose size is adjustable, adjusting the size of the folder icon on the target adjustment page, to obtain an adjusted folder icon; and
arranging the at least one to-be-added folder icon and the icon on the target adjustment page to the third display page according to the third preset arrangement sub-rule, to obtain the at least one to-be-used display page.

19. The method according to claim 18, further comprising:
if it is determined that there is an adjustable icon in the icon on the target adjustment page, adjusting a size of the adjustable icon on the target adjustment page, to obtain an adjusted icon on the target adjustment page;
determining a quantity of rows occupied by the adjusted icon on the target adjustment page;
if the quantity of rows occupied by the adjusted icon on the target adjustment page does not exceed a quantity of rows of the desktop layout of the electronic device, determining, based on the desktop layout of the electronic device, the adjusted icon on the target adjustment page, and the second icon classification sub-rule, whether to add a folder; and
arranging, based on the third preset arrangement sub-rule and a determined result of whether to add the folder, the adjusted icon on the target adjustment page to the third display page, to obtain the at least one to-be-used display page.

20. The method according to claim 17, wherein the determining a to-be-used display page with a highest priority in the at least one to-be-used display page as the target display page comprises:
determining a display sequence in the to-be-used display page in descending order of priorities based on the priority of the to-be-used display page; and
determining a 1^{st} to-be-used display page as the target display page based on the display sequence in the to-be-used display page; and
the method further comprises:
in response to the single-page layout adjustment operation of the user, updating a next to-be-used display page of the current target display page as the target display page based on the display sequence in the to-be-used display page; and
displaying the updated target display page.

21. The method according to claim 1, wherein the layout adjustment operation comprises a template-based layout adjustment operation, and the determining a target adjustment page and a target adjustment rule in response to a layout adjustment operation of a user comprises:
obtaining a preset layout template in response to the template-based layout adjustment operation of the user, and displaying the preset layout template on the electronic device;
in response to a template selection operation of the user, determining all display pages of the electronic device as target adjustment pages, and determining a to-be-used template; and
determining a template-based layout adjustment rule corresponding to the to-be-used template as the target adjustment rule.

22. An icon arrangement apparatus, comprising:
a processing unit, configured to determine a target adjustment page and a target adjustment rule in response to a layout adjustment operation of a user; and
an obtaining unit, configured to obtain an icon on the target adjustment page, wherein
the processing unit is further configured to determine a desktop layout of an electronic device;
the processing unit is further configured to adjust an icon layout of the target adjustment page based on the desktop layout of the electronic device and the target adjustment rule, to obtain at least one target display page, wherein each of the at least one target display page comprises a plurality of application icons and another icon, the another icon comprises at least one of a folder icon, a service card, or a widget, and the folder icon comprises at least two application icons; and
the processing unit is further configured to display the at least one target display page.

23. An electronic device, comprising a processor and a memory, wherein the memory stores a computer program, and when the computer program is executed, the electronic device is enabled to perform the method according to any one of claims 1 to 21.

24. A computer-readable storage medium, wherein the computer-readable storage medium comprises a stored program, and when the program runs, a device in which the computer-readable storage medium is located is controlled to perform the method according to any one of claims 1 to 21.
